# EUROPEAN PATENT APPLICATION

(11) **EP 4 653 636 A1**
(43) Date of publication of application: **26.11.2025**
(21) Application number: 24744711.3
(22) Date of filing: 18.01.2024
(51) Int. Cl.: E04G 21/12

(54) **REINFORCING BAR BINDING ROBOT**

(30) Priority: 20.01.2023 JP 2023007174
(71) Applicant: MAX CO., LTD., Tokyo 103-8502 (JP)
(72) Inventor: EBIHARA Tokichika, Tokyo 103-8502 (JP)
(74) Representative: Samson & Partner Patentanwälte mbB
(86) International application number: PCT/JP2024/001322
(87) International publication number: WO 2024/154791

(57) **Abstract**

A reinforcing bar binding robot according to the present disclosure includes a traveling unit configured to travel on a reinforcing bar group including a plurality of first reinforcing bars whose extending direction is a first direction and a plurality of second reinforcing bars whose extending direction is a second direction intersecting with the first direction and which are arranged to intersect with the first reinforcing bars; a sensor unit configured to detect at least one first reinforcing bar and/or at least one second reinforcing bar; and a reinforcing bar position calculation unit configured to calculate a position of the at least one first reinforcing bar and/or the at least one second reinforcing bar detected by the sensor unit based on pixel values of a plurality of pixels that form a two-dimensional image generated by a detection result of the sensor unit.

## Description

### TECHNICAL FIELD

The present embodiment relates to a reinforcing bar binding robot.

### BACKGROUND ART

In the related art, for example, a technique for automating a reinforcing bar binding work of binding, with a wire or the like, an intersecting portion where a reinforcing bar extending in a longitudinal direction and a reinforcing bar extending in a lateral direction intersect with each other has been studied. For example, Patent Literature 1 discloses a self-propelled work robot that can be used for reinforcing bar construction. In the work robot disclosed in Patent Literature 1, a reinforcing bar end detection sensor that detects a reinforcing bar in a longitudinal direction and an intersecting reinforcing bar detection sensor that detects a reinforcing bar in a lateral direction are provided, and when a reinforcing bar in the lateral direction is detected by the intersecting reinforcing bar detection sensor, it is determined that there is an intersecting portion where the reinforcing bar in the longitudinal direction and the reinforcing bar in the lateral direction intersect with each other based on detection result information from the reinforcing bar end detection sensor and the intersecting reinforcing bar detection sensor, and the reinforcing bars are bound.

### CITATION LIST

### PATENT LITERATURE

Patent Literature 1: JP2019-039174A

### SUMMARY OF INVENTION

### TECHNICAL PROBLEM

According to the technique disclosed in Patent Literature 1, a binding position can be determined based on the detection results of the sensors. However, if there is a delay in determining the position of the intersecting portion due to a calculation time required to process the detection results from the sensors, it may not be possible to efficiently perform the binding work on the reinforcing bars at the intersecting portion. Especially, in recent years, there has been a trend toward automating the work robot for performing reinforcing bar binding, one of goals of which is to improve efficiency of the binding work, and it is considered desirable to further shorten the time for calculating the positions of the reinforcing bars.

The present disclosure has been made in view of the above problem, and an object thereof is to provide a reinforcing bar binding robot capable of improving efficiency of a reinforcing bar detection process.

### SOLUTION TO PROBLEM

One aspect of the present disclosure provides a reinforcing bar binding robot, including: a traveling unit configured to travel on a reinforcing bar group including a plurality of first reinforcing bars whose extending direction is a first direction and a plurality of second reinforcing bars whose extending direction is a second direction intersecting with the first direction and which are arranged to intersect with the first reinforcing bars; a sensor unit configured to detect at least one first reinforcing bar and/or at least one second reinforcing bar; and a reinforcing bar position calculation unit configured to calculate a position of the at least one first reinforcing bar and/or the at least one second reinforcing bar detected by the sensor unit based on pixel values of a plurality of pixels that constitute a two-dimensional image generated by a detection result of the sensor unit.

### ADVANTAGEOUS EFFECTS OF INVENTION

According to the present disclosure, a reinforcing bar binding robot capable of improving efficiency of a reinforcing bar binding process is provided.

### BRIEF DESCRIPTION OF DRAWINGS

[FIG. 1] FIG. 1 is an overall perspective view of a reinforcing bar binding robot 100 according to an embodiment of the present disclosure as viewed obliquely from an upper direction;
[FIG. 2] FIG. 2 is an overall perspective view of the reinforcing bar binding robot according to the embodiment of the present disclosure as viewed obliquely from a lower direction;
[FIG. 3] FIG. 3 is a plan view of the reinforcing bar binding robot 100 as viewed from the upper direction (from an upper side in a Z direction);
[FIG. 4] FIG. 4 is a plan view of the reinforcing bar binding robot 100 as viewed from the lower direction (from a lower side in the Z direction);
[FIG. 5] FIG. 5 is a perspective view of the reinforcing bar binding robot 100 with a reinforcing bar binding unit 110 removed, as viewed obliquely from the upper direction;
[FIG. 6] FIG. 6 is a perspective view of the reinforcing bar binding robot 100 with the reinforcing bar binding unit 110 removed, as viewed obliquely from the lower direction;
[FIG. 7] FIG. 7 is a diagram illustrating a functional block configuration of the reinforcing bar binding robot 100;
[FIG. 8] FIG. 8 is a diagram of the reinforcing bar binding robot 100 in traveling along a first reinforcing bar R10 as viewed from a Y direction;
[FIG. 9] FIG. 9 is a diagram of the reinforcing bar binding robot 100 in traveling along the first reinforcing bar R10 as viewed from an X direction;
[FIG. 10] FIG. 10 is a diagram of the reinforcing bar binding robot 100 that stops traveling and performs a binding work, as viewed from the Y direction;
[FIG. 11] FIG. 11 is a diagram of the reinforcing bar binding robot 100 that performs the binding work as viewed from the X direction;
[FIG. 12] FIG. 12 is a diagram of the reinforcing bar binding robot 100 that performs the binding work as viewed from the lower side in the Z direction;
[FIG. 13] (a) of FIG. 13 shows an image of a vicinity of an intersecting section of the first reinforcing bar R10 and a second reinforcing bar R20 captured by a 3D distance camera, and (b) of FIG. 13 schematically shows an image of the vicinity of the intersecting section of the first reinforcing bar R10 and the second reinforcing bar R20;
[FIG. 14] (a) of FIG. 14 is a schematic side view of the reinforcing bar binding robot 100 as viewed from a horizontal direction (X direction), and (b) of FIG. 14 is a schematic top view of the reinforcing bar binding robot 100 as viewed from the upper direction (from the upper side in the Z direction);
[FIG. 15] FIG. 15 is a diagram schematically showing an image captured by a first sensor 130a;
[FIG. 16] FIG. 16 is a schematic diagram for illustrating template matching;
[FIG. 17] FIG. 17 is a diagram schematically showing the reinforcing bar binding robot 100 for illustrating a method for estimating the intersecting section;
[FIG. 18] FIG. 18 is a flowchart of a method for estimating an intersecting section c12 in the embodiment of the present disclosure;
[FIG. 19] FIG. 19 is a flowchart related to a lateral movement of the reinforcing bar binding robot 100;
[FIG. 20] (a) of FIG. 20 is a diagram of the reinforcing bar binding robot 100 during the lateral movement as viewed from a rear side, and (b) of FIG. 20 is a diagram of the reinforcing bar binding robot 100 during the lateral movement as viewed obliquely from the upper direction;
[FIG. 21] (a) of FIG. 21 is a diagram of the reinforcing bar binding robot 100 during the lateral movement as viewed from the rear side, and (b) of FIG. 21 is a diagram of the reinforcing bar binding robot 100 during the lateral movement as viewed obliquely from the upper direction;
[FIG. 22] (a) of FIG. 22 is a diagram of the reinforcing bar binding robot 100 during the lateral movement as viewed from the rear side, and (b) of FIG. 22 is a diagram of the reinforcing bar binding robot 100 during the lateral movement as viewed obliquely from the upper direction;
[FIG. 23] (a) of FIG. 23 is a diagram of the reinforcing bar binding robot 100 during the lateral movement as viewed from the rear side, and (b) of FIG. 23 is a diagram of the reinforcing bar binding robot 100 during the lateral movement as viewed obliquely from the upper direction;
[FIG. 24] (a) of FIG. 24 is a diagram of the reinforcing bar binding robot 100 during the lateral movement as viewed from the rear side, and (b) of FIG. 24 is a diagram of the reinforcing bar binding robot 100 during the lateral movement as viewed obliquely from the upper direction;
[FIG. 25] (a) of FIG. 25 is a diagram of the reinforcing bar binding robot 100 during the lateral movement as viewed from the rear side, and (b) of FIG. 25 is a diagram of the reinforcing bar binding robot 100 during the lateral movement as viewed obliquely from the upper direction; and
[FIG. 26] FIG. 26 is a schematic diagram of a reinforcing bar binding robot 200 according to another embodiment of the present disclosure as viewed from the lower side in the Z direction.

### DESCRIPTION OF EMBODIMENTS

The present embodiment will be described below with reference to the accompanying drawings. In order to facilitate understanding of the description, the same components are denoted by the same reference numerals as much as possible in the drawings, and redundant descriptions will be omitted.

Hereinafter, a configuration of a reinforcing bar binding robot 100 according to the embodiment of the present disclosure will be described. In the drawings, an X axis, a Y axis, and a Z axis may be illustrated. The X axis, the Y axis, and the Z axis constitute a right-handed three-dimensional orthogonal coordinate system. Hereinafter, an arrow direction of the X axis may be referred to as an X axis front side, a right side in an X direction, or an X axis right side, and a direction opposite to the arrow direction may be referred to as an X axis rear side, a left side in the X direction, or an X axis left side. The same applies to other axes. A Z axis front side and a Z axis rear side may be referred to as an "upper side" or "upper" and a "lower side" or "lower", respectively. A plane orthogonal to each of the X axis, the Y axis, and the Z axis may be referred to as a YZ plane, a ZX plane, and an XY plane. These directions and the like are used for convenience in describing relative positional relations. Accordingly, these directions and the like do not define absolute positional relations.

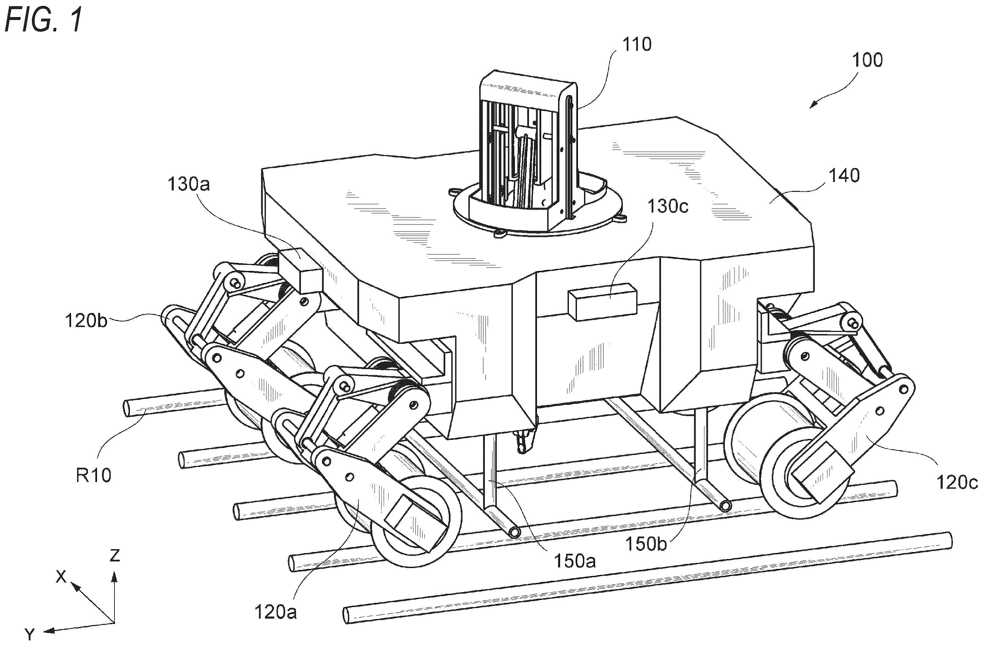

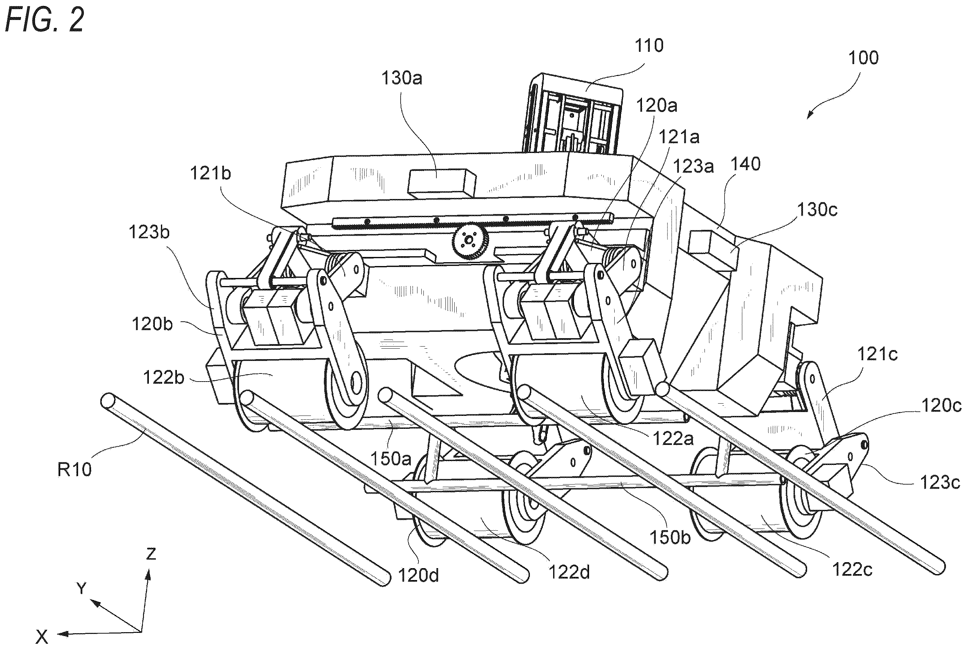

FIG. 1 is an overall perspective view of the reinforcing bar binding robot 100 according to the embodiment of the present disclosure as viewed obliquely from an upper direction. FIG. 2 is an overall perspective view of the reinforcing bar binding robot according to the embodiment of the present disclosure as viewed obliquely from a lower direction. As shown in FIGS. 1 and 2, the reinforcing bar binding robot 100 according to the embodiment of the present disclosure includes a reinforcing bar binding unit 110, a traveling unit 120, and a sensor unit 130. The reinforcing bar binding robot 100 may further include other configurations such as a body unit 140, support bars 150, a control device 160 (not shown), a movement unit 180, and a storage device 190.

FIGS. 1 and 2 also show a reinforcing bar group R including a plurality of reinforcing bars R10 (also referred to as "first reinforcing bars" or "longitudinal reinforcing bars" in the present embodiment) extending in a Y direction. As shown in FIGS. 1 and 2, the reinforcing bar binding robot 100 is disposed on the reinforcing bar group R to travel along the first reinforcing bars R10. As described later, the reinforcing bar group R may include a plurality of reinforcing bars (also referred to as "second reinforcing bars R20" or "lateral reinforcing bars" in the present embodiment) extending in the X direction in addition to the plurality of reinforcing bars R10.

In the embodiment of the present disclosure, the first reinforcing bars R10 are arranged such that a first direction, which is an extending direction of the first reinforcing bars R10, is parallel to the Y direction. The second reinforcing bars R20 described later are arranged such that a second direction, which is an extending direction of the second reinforcing bars R20, is parallel to the X direction. Therefore, in the exemplary embodiment of the present disclosure, the first reinforcing bars R10 and the second reinforcing bars R20 are arranged to be orthogonal to each other. The first reinforcing bars R10 and the second reinforcing bars R20 are arranged such that a plane formed by the first reinforcing bars R10 and the second reinforcing bars R20 (also referred to as a "reinforcing bar plane" in the present embodiment) is parallel to the XY plane. Therefore, the plane formed by the first reinforcing bars R10 and the second reinforcing bars R20 is a horizontal plane in the present embodiment. The arrangement of the first reinforcing bars R10 and the second reinforcing bars R20 is not limited thereto. For example, as described later, the first reinforcing bars R10 and the second reinforcing bars R20 may be arranged not to be orthogonal to each other. For example, the first reinforcing bars R10 and the second reinforcing bars R20 may be arranged such that an angle between the first reinforcing bars R10 and the second reinforcing bars R20 is, for example, 30°, 45°, 60°, or other degrees. In the embodiment of the present disclosure, the first reinforcing bars R10 and the second reinforcing bars R20 are arranged to be orthogonal to each other, but for example, the first reinforcing bars R10 and the second reinforcing bars R20 do not have to be orthogonal to each other depending on intersecting sections, and may be arranged to form an angle of, for example, 85° or more and 90° or less.

The first reinforcing bars R10 and the second reinforcing bars R20 may have a limited length, and the plurality of first reinforcing bars R10 or the plurality of second reinforcing bars R20 may be connected via joints in the first direction or the second direction. Further, each of the first reinforcing bars R10 and the second reinforcing bars R20 may have ends as described later, and for example, the first reinforcing bar R10 and the second reinforcing bar R20 may have ends R10e and R20e described later at one end and the other end in the first direction and the second direction, respectively.

The reinforcing bar binding unit 110 is configured to bind an intersecting section c12 of the first reinforcing bar R10 and the second reinforcing bar R20. The binding operation on the intersecting section c12 of the first reinforcing bar R10 and the second reinforcing bar R20 performed by the reinforcing bar binding unit 110 will be described in detail later.

As shown in FIGS. 1 and 2, the traveling unit 120 may include four traveling units 120a, 120b, 120c, and 120d (in the present embodiment, also referred to as a "first traveling unit", a "second traveling unit", a "third traveling unit", and a "fourth traveling unit", respectively). In the embodiment of the present disclosure, the traveling unit 120 is disposed on the reinforcing bar group R such that the reinforcing bar binding robot 100 travels in the Y direction. The first traveling unit 120a, the second traveling unit 120b, the third traveling unit 120c, and the fourth traveling unit 120d include a first roller 122a, a second roller 122b, a third roller 122c, and a fourth roller 122d, respectively, and the first roller 122a, the second roller 122b, the third roller 122c, and the fourth roller 122d are configured to travel on any first reinforcing bar R10 of the plurality of first reinforcing bar R10 along the Y direction (first direction) that is the extending direction of the first reinforcing bars R10.

In the embodiment of the present disclosure, a case where the first traveling unit 120a, the second traveling unit 120b, the third traveling unit 120c, and the fourth traveling unit 120d are configured to advance in the Y direction will be described as an example, but the first traveling unit 120a, the second traveling unit 120b, the third traveling unit 120c, and the fourth traveling unit 120d may be configured to advance in a direction other than the Y direction. For example, the traveling units may advance in a direction at an angle of several degrees to several tens of degrees from the Y direction, and for example, even when an orientation of the reinforcing bar binding robot 100 is inclined due to presence of a foreign matter on the first reinforcing bar R10 on which the traveling unit is traveling, the binding on the intersecting section c12 of the first reinforcing bar R10 and the second reinforcing bar R20 by the reinforcing bar binding unit 110 of the reinforcing bar binding robot 100 can still be executed since the reinforcing bar binding robot 100 travels substantially following the first reinforcing bar R10. For example, even at a construction site where the first reinforcing bars R10 are arranged to draw a curve, the first traveling unit 120a, the second traveling unit 120b, the third traveling unit 120c, and the fourth traveling unit 120d may be configured to advance to draw a curve to follow the curved first reinforcing bars R10, and in this case, the first direction as the extending direction of the first reinforcing bars R10 may be different for each point constituting the curve.

As shown in FIGS. 1 and 2 and FIG. 3 to be described later, the sensor unit 130 includes a sensor 130a, a sensor 130b, a sensor 130c, and a sensor 130d (in the present embodiment, also referred to as a "first sensor", a "second sensor", a "third sensor", and a "fourth sensor", respectively). The first sensor 130a and the second sensor 130b are arranged away from each other along the Y direction in FIGS. 1 and 2 (in the present embodiment, a direction along which a straight line connecting the first sensor 130a and the second sensor 130b extends is also referred to as a "third direction"). The fourth sensor 130d is disposed on a side surface of the reinforcing bar binding robot 100 opposite to a side surface on which the third sensor 130c is provided (the side surface on a back side of the paper surface in FIGS. 1 and 2), and the third sensor 130c and the fourth sensor 130d are arranged away from each other along a direction intersecting with the Y direction in FIGS. 1 and 2 (the X direction in the example shown in FIGS. 1 and 2, and an extending direction of a straight line connecting the third sensor 130c and the fourth sensor 130d in the present embodiment are also referred to as a "fourth direction").

The first sensor 130a, the second sensor 130b, the third sensor 130c, and the fourth sensor 130d are configured to detect the first reinforcing bar R10 and/or the second reinforcing bar R20. For example, the first sensor 130a and the second sensor 130b may be configured to detect the first reinforcing bar R10, and the third sensor 130c and the fourth sensor 130d may be configured to detect the second reinforcing bar R20. Alternatively, all of the first sensor 130a, the second sensor 130b, the third sensor 130c, and the fourth sensor 130d may be configured to detect the first reinforcing bar R10 and the second reinforcing bar R20.

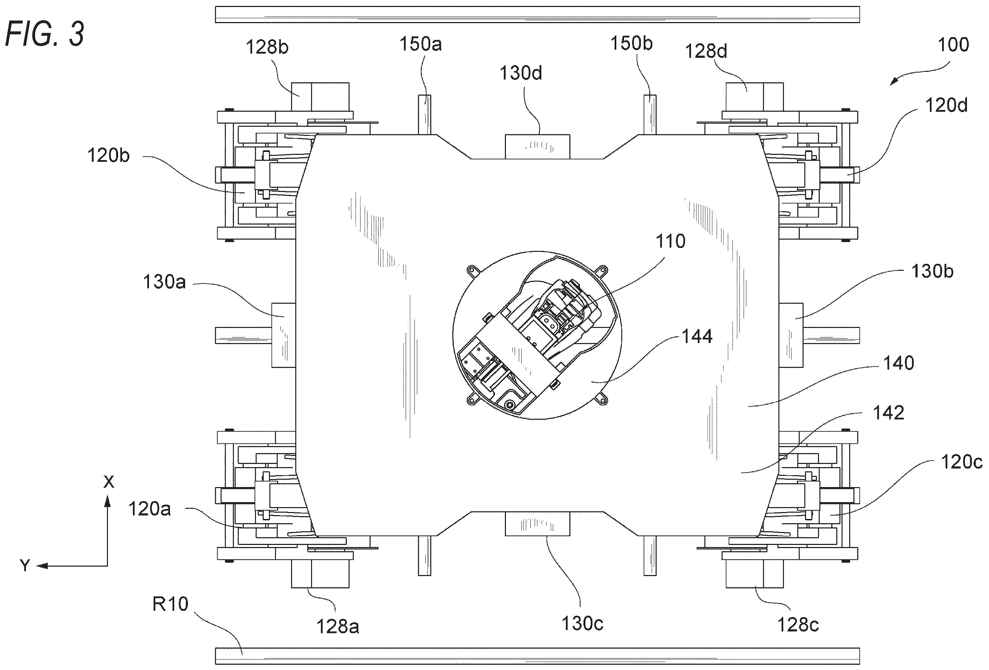

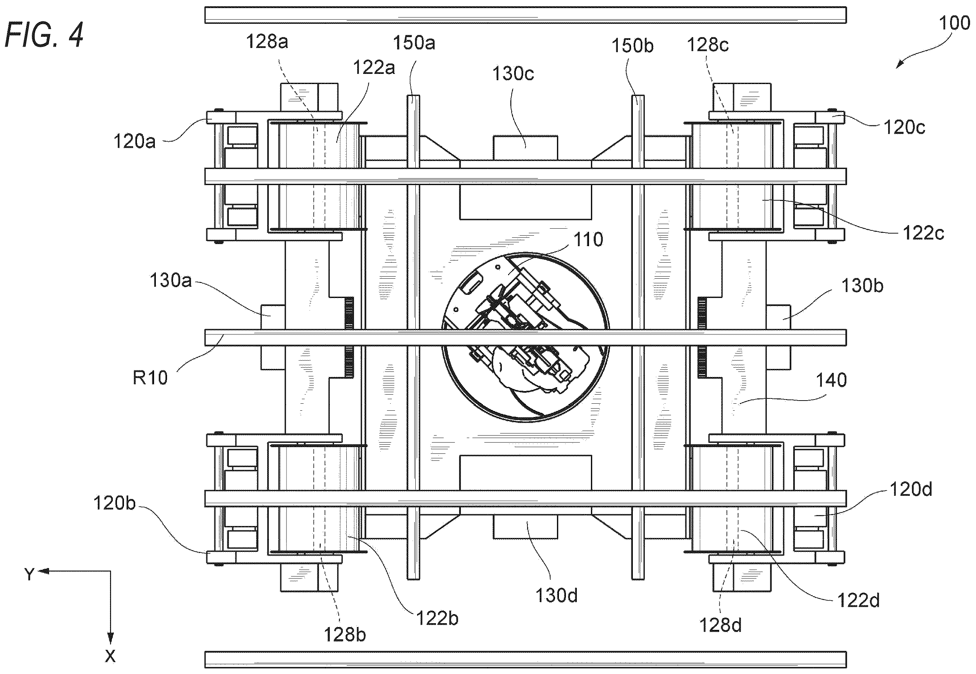

FIG. 3 is a plan view of the reinforcing bar binding robot 100 as viewed from the upper direction (from an upper side in a Z direction). FIG. 4 is a plan view of the reinforcing bar binding robot 100 as viewed from the lower direction (from a lower side in the Z direction). As can be seen from FIGS. 3 and 4, the first traveling unit 120a and the second traveling unit 120b may be respectively disposed on one side and the other side (a left side and a right side of the X direction in FIG. 3) of the fourth direction (X direction) with respect to the first sensor 130a. The third traveling unit 120c and the fourth traveling unit 120d may be respectively disposed on one side and the other side of the fourth direction (X direction) with respect to the second sensor 130b. In other words, the first sensor 130a may be disposed between the first traveling unit 120a and the second traveling unit 120b in the fourth direction. Similarly, the second sensor 130b may be disposed between the third traveling unit 120c and the fourth traveling unit 120d in the fourth direction. Further, as shown in FIGS. 3 and 4, the third sensor 130c may be disposed between the first traveling unit 120a and the third traveling unit 120c in the third direction (the Y direction in FIGS. 3 and 4), and similarly, the fourth sensor 130d may be disposed between the second traveling unit 120b and the fourth traveling unit 120d in the third direction (the Y direction). For example, as shown in FIG. 4, a camera constituting the first sensor 130a is disposed in front of a straight line passing through a rotation shaft 128a of the first roller 122a constituting the first traveling unit 120a and a rotation shaft 128b of the second roller 122b constituting the second traveling unit 120b in a top view (at a front side in the Y direction in FIG. 4). Similarly, a camera constituting the second sensor 130b is disposed behind a straight line passing through a rotation shaft 128c of the third roller 122c constituting the third traveling unit 120c and a rotation shaft 128d of the fourth roller 122d constituting the fourth traveling unit 120d in a top view (at a rear side in the Y direction in FIG. 4). As shown in FIGS. 3 and 4, the first sensor 130a is disposed at a front side of the body unit 140 in a Y axis direction. Similarly, the second sensor 130b is disposed at a rear side of the body unit 140 in the Y axis direction. The third sensor 130c and the fourth sensor 130d are respectively disposed on the left side and the right side of the X direction in the top view of the body unit 140 in FIG. 3. That is, for example, as can be seen from FIG. 4 and the like, in the present embodiment, the first sensor 130a, the second sensor 130b, the third sensor 130c, and the fourth sensor 130d are disposed on outer edges of or on outer sides of a rectangle virtually formed by connecting vicinities of centers of the first traveling unit 120a, the second traveling unit 120b, the third traveling unit 120c, and the fourth traveling unit 120d in a plan view of the reinforcing bar binding robot 100. The rectangle virtually formed by the first traveling unit 120a to the fourth traveling unit 120d may be a square when, for example, intervals between the traveling units in the X direction and the Y direction are substantially equal, and in this case, the first sensor 130a to the fourth sensor 130d may be disposed on the outer edges of or outer sides of the virtual square. Depending on an arrangement configuration of the first traveling unit 120a to the fourth traveling unit 120d, a quadrangle other than a rectangle or a square may be virtually formed by the first traveling unit 120a to the fourth traveling unit 120d, and also in this case, the first sensor 130a to the fourth sensor 130d may be disposed on outer edges of or outer sides of the virtual quadrangle.

As shown in FIGS. 1 and 3, the body unit 140 may include a body upper surface 142. For example, a circular hole 144 may be formed in a vicinity of a center of the body upper surface 142, and the reinforcing bar binding unit 110 may be disposed penetrating the hole 144.

In the present embodiment, the reinforcing bar binding robot 100 may include, for example, two support bars 150 (a first support bar 150a and a second support bar 150b). The first support bar 150a and the second support bar 150b are bars extending in one direction, and are provided, for example, in parallel to the fourth direction (the X direction in FIGS. 1 to 4). Therefore, in the embodiment of the present disclosure, the first support bar 150a and the second support bar 150b are provided in parallel to the horizontal direction, for example. As shown in FIGS. 1 to 4, the first support bar 150a and the second support bar 150b may be provided away from each other in the Y direction (the third direction). As will be described in detail later, for example, the first support bar 150a and the second support bar 150b may be configured to support the body unit 140 and the like of the reinforcing bar binding robot 100 when the reinforcing bar binding robot 100 moves in a lateral direction (the X direction in FIGS. 1 to 4, the fourth direction in the reinforcing bar binding robot 100).

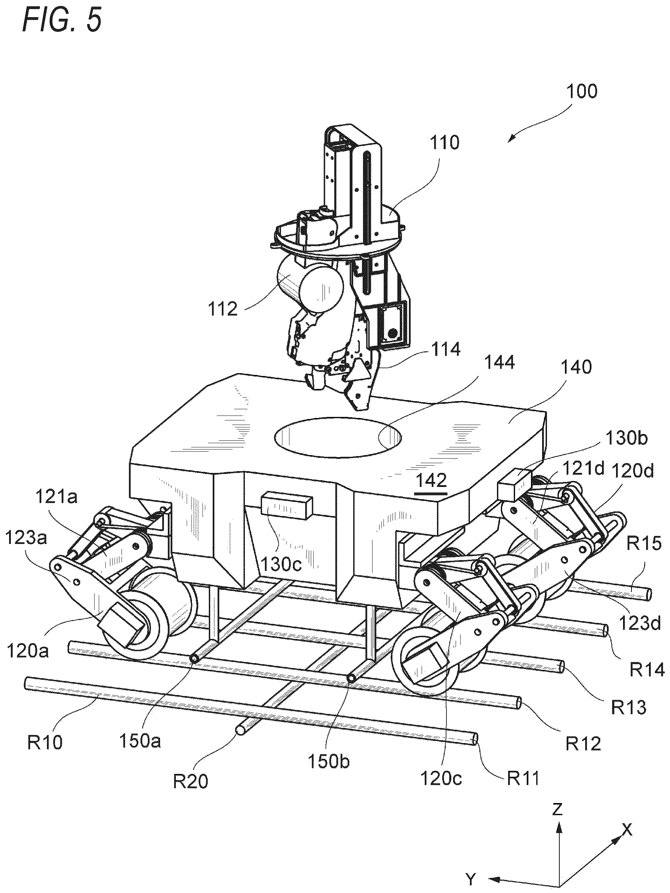

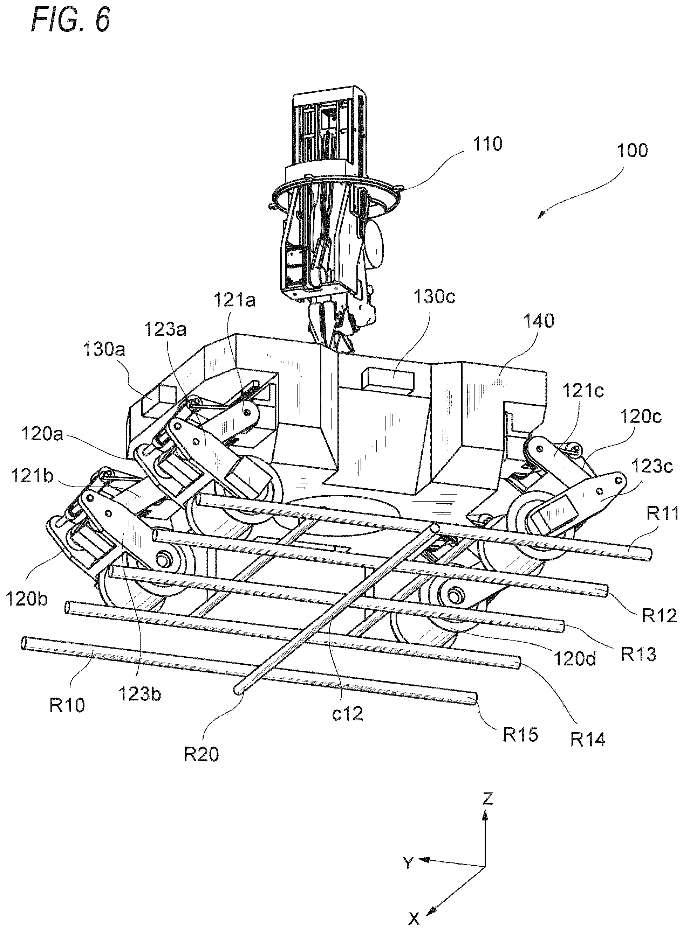

FIG. 5 is a perspective view of the reinforcing bar binding robot 100 with the reinforcing bar binding unit 110 removed, as viewed obliquely from the upper direction. FIG. 6 is a perspective view of the reinforcing bar binding robot 100 with the reinforcing bar binding unit 110 removed, as viewed obliquely from the lower direction. As shown in FIGS. 5 and 6, the reinforcing bar binding unit 110 may be provided to be movable in an upper-lower direction (the Z direction in FIG. 1) while penetrating the hole 144. Accordingly, for example, the reinforcing bar binding unit 110 is configured to be lowered and bind the intersecting section c12 of the first reinforcing bar R10 and the second reinforcing bar R20 when the reinforcing bar binding robot 100 reaches the intersecting section c12 of the first reinforcing bar R10 and the second reinforcing bar R20. As shown in FIGS. 5 and 6, the reinforcing bar binding unit 110 includes a magazine 112. A wire used for binding the reinforcing bars is accommodated in the magazine 112, and when the reinforcing bar binding unit 110 binds the intersecting section c12 of the first reinforcing bar R10 and the second reinforcing bar R20, the wire accommodated in the magazine 112 is pulled out to perform the binding at the intersecting section c12. Although detailed description will be omitted, at one end (an end at the lower side in the Z direction in FIG. 5) of the reinforcing bar binding unit 110, the reinforcing bar binding unit 110 is provided with a reinforcing bar binding mechanism 114 with a wire guide or the like and configured to perform a reinforcing bar binding work. The reinforcing bar binding work of the reinforcing bar binding mechanism 114 may be implemented by, for example, a function same as that of a well-known reinforcing bar binding machine.

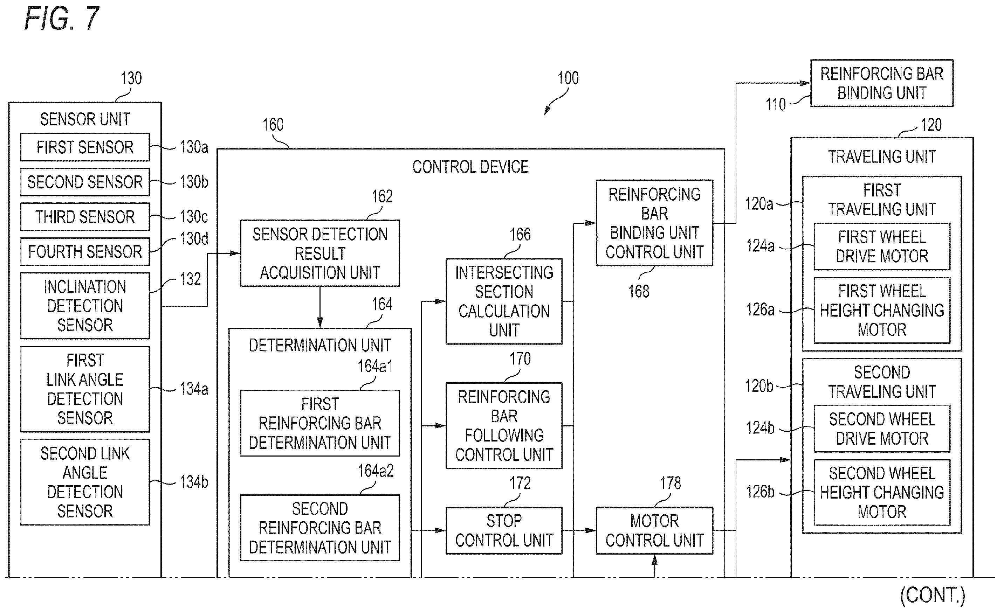

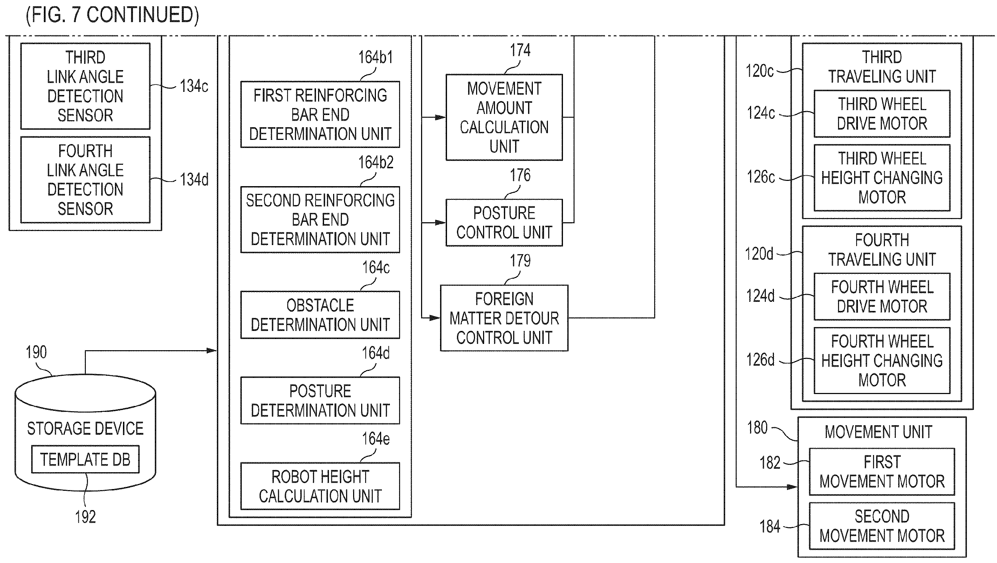

FIG. 7 is a diagram illustrating a functional block configuration of the reinforcing bar binding robot 100. As shown in FIG. 7, the reinforcing bar binding robot 100 may include the control device 160, the movement unit 180, and the storage device 190 in addition to the configurations of the reinforcing bar binding unit 110, the traveling unit 120, the sensor unit 130, and the like described above.

The control device 160 is configured to control movement and the binding work executed by the reinforcing bar binding robot 100. The control device 160 may include a sensor detection result acquisition unit 162, a determination unit 164, an intersecting section calculation unit 166 (also referred to as an "intersecting section estimation unit" or an "intersecting section estimation unit" in the present embodiment), a reinforcing bar binding unit control unit 168, a reinforcing bar following control unit 170, a stop control unit 172, a movement amount calculation unit 174, a posture control unit 176, a motor control unit 178, and a foreign matter detour control unit 179.

The movement unit 180 is configured to control movement of the body unit 140 of the reinforcing bar binding robot 100. In the reinforcing bar binding robot 100 according to the embodiment of the present disclosure, as will be described later, the reinforcing bar binding robot 100 may be moved in the horizontal direction by the movement unit 180. The movement unit 180 may include a first movement motor 182 and a second movement motor 184, and for example, when the reinforcing bar binding robot 100 is in lateral movement described later, the body unit 140 may be horizontally moved by the two motors 182 and 184.

The storage device 190 may store, for example, one or a plurality of programs to be executed in the control device 160, data used for controlling the reinforcing bar binding robot 100, and the like. The storage device 190 may include, for example, a template database 192. For example, as will be described later, the template database 192 may store template images used when detecting the first reinforcing bar R10 and/or the second reinforcing bar R20 and the end R10e of the first reinforcing bar R10 and/or the end R20e of the second reinforcing bar R20 by using template matching based on the detection results obtained by the sensor unit 130, and may store data obtained by performing image processing such as frequency analysis on the template images, and the like. The control device 160 may further include a template data creation unit, and for example, may be configured to create template data based on an image captured by the sensor unit 130 according to a site subjected to the reinforcing bar binding work, and to store the template data in the template database 192. The template data stored in the template database 192 may be accumulated, for example, at a timing when new template data is created, or may be deleted at a timing when the binding work at the construction site is completed. Alternatively, the created template data may be configured to be retained in the template database 192 of the storage device 190 for a certain period of time and then deleted, for example, periodically.

The sensor detection result acquisition unit 162 acquires the detection result of the sensor unit 130. For example, detection results of the first sensor 130a, the second sensor 130b, the third sensor 130c, and/or the fourth sensor 130d of the sensor unit 130 may be used for the determination on the first reinforcing bar R10 and/or the second reinforcing bar R20 by a first reinforcing bar determination unit 164a1 and/or a second reinforcing bar determination unit 164a2 of the determination unit 164. The detection results of the first sensor 130a, the second sensor 130b, the third sensor 130c, and/or the fourth sensor 130d may be used for the determination on the end R10e of the first reinforcing bar R10 and/or the end R20e of the second reinforcing bar R20 by a first reinforcing bar end determination unit 164b1 and/or a second reinforcing bar end determination unit 164b2 of the determination unit 164.

The determination unit 164 may include the first reinforcing bar determination unit 164a1, the second reinforcing bar determination unit 164a2, the first reinforcing bar end determination unit 164b1, the second reinforcing bar end determination unit 164b2, a posture determination unit 164c, an obstacle determination unit 164d, and a robot height calculation unit 164e. The first reinforcing bar determination unit 164a1 and the second reinforcing bar determination unit 164a2 determine the first reinforcing bar R10 and/or the second reinforcing bar R20 by using, for example, the detection results of the first sensor 130a, the second sensor 130b, the third sensor 130c, and/or the fourth sensor 130d acquired by the sensor detection result acquisition unit 162. As will be described later, the first reinforcing bar determination unit 164a1 and the second reinforcing bar determination unit 164a2 may determine a position of the first reinforcing bar R10 and/or the second reinforcing bar R20 by performing the template matching based on captured images that are the detection results of the first sensor 130a to the fourth sensor 130d. The first reinforcing bar end determination unit 164b1 and the second reinforcing bar end determination unit 164b2 determine the end R10e of the first reinforcing bar R10 and/or the end R20e of the second reinforcing bar R20 by using, for example, the detection results of the first sensor 130a, the second sensor 130b, the third sensor 130c, and/or the fourth sensor 130d acquired by the sensor detection result acquisition unit 162. Similarly to the first reinforcing bar determination unit 164a1 and the second reinforcing bar determination unit 164a2, the first reinforcing bar end determination unit 164b1 and the second reinforcing bar end determination unit 164b2 may also determine the end R10e of the first reinforcing bar R10 and/or the end R20e of the second reinforcing bar R20 based on the template matching. For example, the robot height calculation unit 164e may calculate a height of the reinforcing bar binding robot 100 from the reinforcing bar group R based on the detection results of the first sensor 130a, the second sensor 130b, the third sensor 130c, and/or the fourth sensor 130d. For example, when images of the first reinforcing bar R10 and/or the second reinforcing bar R20 are captured by the first sensor 130a, the second sensor 130b, the third sensor 130c, and/or the fourth sensor 130d (for example, when an image of a range including the first reinforcing bar R10 and/or the second reinforcing bar R20 is captured), the robot height calculation unit 164e may calculate the height of the reinforcing bar binding robot 100 from the reinforcing bar group R by calculating a distance of the reinforcing bar binding robot 100 from the reinforcing bar group R based on a relative size of the first reinforcing bar R10 and/or the second reinforcing bar R20 in the captured images of the first reinforcing bar R10 and/or the second reinforcing bar R20.

The height of the reinforcing bar binding robot 100 from the reinforcing bar group R may be calculated based on, for example, an angle of the traveling unit 120. As shown in FIG. 2, the traveling unit 120a may include a first body side link portion 121a connected to the body portion 140 and a first roller side link portion 123a connected to the second first roller 122a, and the first body side link portion 121a and the first roller side link portion 123a may constitute a link mechanism. In this case, a link angle which is an angle formed by the first body side link portion 121a and the first roller side link portion 123a may be detected by a first link angle detection sensor 134a of the sensor unit 130, and a height of the first traveling unit 120a may be calculated based on the link angle. Similarly, the second traveling unit 120b may include a second body side link portion 121b and a second roller side link portion 123b, the third traveling unit 120c may include a third body side link portion 121c and a third roller side link portion 123c, and the fourth traveling unit 120d may include a fourth body side link portion 121d and a fourth roller side link portion 123d, and heights of the second traveling unit 120b, the third traveling unit 120c, and the fourth traveling unit 120d may be calculated by detecting a link angle formed by the second body side link portion 121b and the second roller side link portion 123b, a link angle formed by the third body side link portion 121c and the third roller side link portion 123c, and a link angle formed by the fourth body side link portion 121d and the fourth roller side link portion 123d by a second link angle detection sensor 134b, a third link angle detection sensor 134c, and a fourth link angle detection sensor 134d, respectively. The robot height calculation unit 164e may calculate the height of the reinforcing bar binding robot 100 from the reinforcing bar group R based on the heights (heights from the reinforcing bar group R) of the first traveling unit 120a, the second traveling unit 120b, the third traveling unit 120c, and the fourth traveling unit 120d calculated in this way. For example, the height of the reinforcing bar binding robot 100 may be calculated by an average value of some or all of the calculated heights of the first traveling unit 120a, the second traveling unit 120b, the third traveling unit 120c, and the fourth traveling unit 120d. For example, when the reinforcing bar binding robot 100 is positioned parallel or substantially parallel to a virtual plane formed by the reinforcing bar group R, the height of the reinforcing bar binding robot 100 may be any one of the heights of the first traveling unit 120a, the second traveling unit 120b, the third traveling unit 120c, and the fourth traveling unit 120d.

As shown in FIG. 7, the sensor unit 130 may include an inclination detection sensor 132 in addition to the first sensor 130a to the fourth sensor 130d described above. As the inclination detection sensor 132, a sensor capable of detecting an inclination angle of the reinforcing bar binding robot 100, such as a well-known inclination sensor or horizontal sensor, may be used. The sensor detection result acquisition unit 162 may also acquire a detection result of the inclination detection sensor 132. For example, a posture of the reinforcing bar binding robot 100 may be determined by the posture determination unit 164c of the determination unit 164 based on the detection result of the inclination detection sensor 132, and the posture of the reinforcing bar binding robot 100 may be adjusted by driving a height changing motor 126 of the traveling unit 120 (a first height changing motor 126a of the first traveling unit 120a, a second height changing motor 126b of the second traveling unit 120b, a third height changing motor 126c of the third traveling unit 120c, and/or a height changing motor 126d of the fourth traveling unit 120d) by the posture control unit 176 based on the determination result of the posture determination unit 164c. For example, the reinforcing bar binding robot 100 may drive the height changing motor 126 based on the detection result of the inclination detection sensor 132 such that the body unit 140 is parallel to a plane formed by the first reinforcing bars R10 and/or the second reinforcing bars R20 (also referred to as a "reinforcing bar plane" in the present embodiment). For example, if the reinforcing bar binding robot 100 is inclined in the X direction when the first reinforcing bars R10 and the second reinforcing bars R20 are arranged such that the reinforcing bar plane extends in the horizontal direction, the heights of the first traveling unit 120a and the third traveling unit 120c or the second traveling unit 120b and the fourth traveling unit 120d among the first traveling unit 120a to the fourth traveling unit 120d may be changed to adjust the posture of the reinforcing bar binding robot 100.

The intersecting section calculation unit 166 estimates the intersecting section c12 of the first reinforcing bar R10 and the second reinforcing bar R20 by calculation. For example, as will be described later, the intersecting section calculation unit 166 may calculate a position of the intersecting section c12 based on the position of the first reinforcing bar R10 and the position of the second reinforcing bar R20 determined by the first reinforcing bar determination unit 164a1 and the second reinforcing bar determination unit 164a2. The reinforcing bar binding robot 100 may perform the binding work by the reinforcing bar binding unit 110 based on the calculated position of the intersecting section c12. Based on the estimated position of the intersecting section c12, the motor control unit 178 may adjust the position of the reinforcing bar binding robot 100 by the first traveling unit 120a, the second traveling unit 120b, the third traveling unit 120c, and/or the fourth traveling unit 120d such that the reinforcing bar binding unit 110 is above the intersecting section c12. After the reinforcing bar binding unit 110 is moved to a position above the intersecting section c12, the reinforcing bar binding unit control unit 168 may lower the reinforcing bar binding unit 110 to the intersecting section c12 and perform the binding at the intersecting section c12.

For example, the reinforcing bar following control unit 170 may cause the motor control unit 178 to control the traveling unit 120 to follow the first reinforcing bar R10 on which the reinforcing bar binding robot 100 is traveling, based on information on the first reinforcing bar R10 determined by the first reinforcing bar determination unit 164a1. For example, as will be described later, when the reinforcing bar binding robot 100 travels on a first reinforcing bar R12 and a first reinforcing bar R14, a drive motor of the traveling unit 120 (a first wheel drive motor 124a for driving the first roller 122a, a second wheel drive motor 124b for driving the second roller 122b, a third wheel drive motor 124c for driving the third roller 122c, and/or a fourth wheel drive motor 124d for driving the fourth roller 122d) may perform driving such that the reinforcing bar binding robot 100 does not move away from the first reinforcing bar R12 and the first reinforcing bar R14. For example, among the first wheel drive motor 124a, the second wheel drive motor 124b, the third wheel drive motor 124c, and the fourth wheel drive motor 124d, the first wheel drive motor 124a and the third wheel drive motor 124c, which are drive motors of the first traveling unit 120a and the third traveling unit 120c disposed at the same position or substantially the same position in the X direction, may be accelerated or decelerated with respect to the second wheel drive motor 124b and the fourth wheel drive motor 124d, which are drive motors of the second traveling unit 120b and the fourth traveling unit 120d disposed on the other side in the X direction, to adjust the position of the reinforcing bar binding robot 100 and cause the reinforcing bar binding robot 100 to travel in a manner of following the first reinforcing bar R10. Alternatively, the reinforcing bar following control unit 170 may cause the reinforcing bar binding robot 100 to travel in a manner of following the first reinforcing bar R10 by, for example, adjusting rotation speeds of the first wheel drive motor 124a, the second wheel drive motor 124b, the third wheel drive motor 124c, and/or the fourth wheel drive motor 124d. For example, the reinforcing bar binding robot 100 can be made to flexibly follow the first reinforcing bar R10 by setting the rotation speed of one or the plurality of the first wheel drive motor 124a, the second wheel drive motor 124b, the third wheel drive motor 124c, and the fourth wheel drive motor 124d to a rotation speed different from the rotation speeds of other wheel drive motors, or by setting the rotation speeds of all of the first wheel drive motor 124a, the second wheel drive motor 124b, the third wheel drive motor 124c, and the fourth wheel drive motor 124d to rotation speeds different from each other.

The stop control unit 172 is configured to control a stop operation of the reinforcing bar binding robot 100. For example, as will be described later, if it is determined that the reinforcing bar binding robot 100 that travels on the first reinforcing bar R12 and the first reinforcing bar R14 is present in the vicinity of an end R13e of a first reinforcing bar R13 or approaching the end R13e by the first reinforcing bar end determination unit 164b1 and/or the second reinforcing bar end determination unit 164b2 based on the detection results of the first sensor 130a, the second sensor 130b, the third sensor 130c, and/or the fourth sensor 130d, the stop control unit 172 may control the motor control unit 178 to drive and stop the first wheel drive motor 124a to the fourth wheel drive motor 124d and stop the reinforcing bar binding robot 100. The reinforcing bar binding robot 100 may be stopped if it is determined that the reinforcing bar binding robot 100 is present in the vicinity of an end R12e of the first reinforcing bar R12 and/or an end R14e of the first reinforcing bar R14, or that the reinforcing bar binding robot 100 is approaching the end R12e and/or the end R14e, not limited to the end R13e of the first reinforcing bar R13, instead of the end R13e, or in addition to the end R13e.

For example, when the above intersecting section calculation unit 166 calculates the intersecting section c12 of the first reinforcing bar R10 and the second reinforcing bar R20, the stop control unit 172 may stop the reinforcing bar binding robot 100 to bind the intersecting section c12 by the reinforcing bar binding unit 110.

As will be described later, for example, the movement amount calculation unit 174 may be configured to calculate a movement amount when the reinforcing bar binding robot 100 performs the lateral movement (movement in the X direction). For example, as described above, if the first reinforcing bar end determination unit 164b1 and/or the second reinforcing bar end determination unit 164b2 determine that the reinforcing bar binding robot 100 is present in the vicinity of or approaching the end R12e of the first reinforcing bar R12 and the end R14e of the first reinforcing bar R14, the reinforcing bar binding robot 100 completes the reinforcing bar binding work at the intersecting section c12 on the first reinforcing bar R13 disposed between the first reinforcing bar R12 and the first reinforcing bar R14, moves to another first reinforcing bar R10, and starts the reinforcing bar binding work at the intersecting section c12. For example, when the reinforcing bar binding robot 100 completes the reinforcing bar binding work at the intersecting section c12 on the first reinforcing bar R13 and then performs the reinforcing bar binding work at the intersecting section c12 on the first reinforcing bar R14, the reinforcing bar binding robot 100 moves in the X direction by one interval with respect to intervals between the first reinforcing bars R10 in the X direction. In this case, the movement amount calculation unit 174 may calculate the movement amount based on the interval between adjacent first reinforcing bars R10 in the X direction based on the information on the positions of the first reinforcing bars R10 determined by the first reinforcing bar determination unit 164a1. Similarly, when the reinforcing bar binding robot 100 performs the reinforcing bar binding work at the intersecting section c12 on the first reinforcing bar R10 two intervals away in the X direction, the movement amount may also be calculated based on the interval between the first reinforcing bars R10. The lateral movement (for example, horizontal movement) of the body unit 140 by the movement unit 180 during the lateral movement may be performed based on the calculated movement amount. The movement amount calculation unit 174 may calculate movement amounts in other directions other than the lateral movement amount. For example, the movement amount calculation unit 174 may calculate a movement amount of longitudinal movement (in the first direction or the Y direction) of the reinforcing bar binding robot 100 based on the detection results of the sensors 130, the determination results of the reinforcing bar end determination unit 164b1 and/or the reinforcing bar end determination unit 164b2, and the like.

As will be described later, for example, a camera may be used as the sensor unit 130, and a position of a foreign matter may be determined by, for example, the obstacle determination unit 164d of the determination unit 164 based on the detection result of the sensor unit 130. In a construction site or the like where reinforcing bars are assembled, on the reinforcing bar plane, for example, a tool or the like may be left, or a worker may be working. The tool and the worker may be detected as foreign matters based on the detection results of the sensor unit 130, and a foreign matter detour control unit may be configured to drive the first wheel drive motor 124a, the second wheel drive motor 124b, the third wheel drive motor 124c, and/or the fourth wheel drive motor 124d by the motor control unit 178 to detour the foreign matters based on the foreign matter detection result. Alternatively, the reinforcing bar binding robot 100 may detour the foreign matter by performing the lateral movement described later.

The control device 160 is, for example, a processor such as a central processing unit (CPU) corresponding to a calculation unit, and is a control unit that performs control related to execution of programs stored in the storage device 190, and calculation and processing of data. The processor is a calculation unit that executes a program for executing operations (reinforcing bar following and traveling, lateral movement (for example, horizontal movement), reinforcing bar binding work, and the like) of the reinforcing bar binding robot 100 using detection data and the like.

The storage device 190 may include, for example, a random access memory (RAM) and a read only memory (ROM). The RAM is a part of a storage unit in which data can be rewritten, and may be implemented by, for example, a semiconductor storage element. The RAM may store a program executed by the processor and data necessary for executing the program (for example, data and the like of a template used for determining the position of the reinforcing bar based on the detection result of the sensor unit 130 as will be described later). The above-described data and program are examples, and other data may be stored in the RAM, or some of the above-described data and program may not be stored.

The ROM is a part of the storage unit from which data can be read, and may be implemented by, for example, a semiconductor storage element. The ROM may store, for example, a program executed by the control device 160 and data that is not rewritten.

The program executed by the control device 160 may be provided by being stored in a computer-readable storage medium such as the storage device 190 (for example, RAM or ROM) or may be provided via a communication network connected by a communication unit (not shown).

A physical configuration described above is an example, and in the reinforcing bar binding robot 100 according to the embodiment of the present disclosure, the control device 160 and the storage device 190 may not necessarily be independent of each other. For example, the reinforcing bar binding robot 100 may include a large-scale integration (LSI) in which a processor and a memory are integrated. The reinforcing bar binding robot 100 may include a graphical processing unit (GPU) as the control device 160, and various operations described above may be implemented by the GPU executing a program.

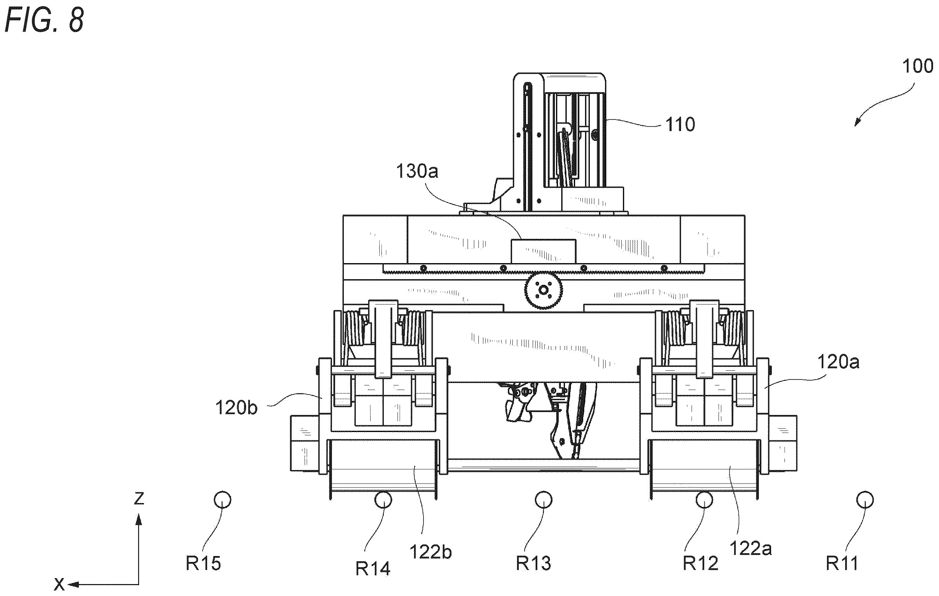

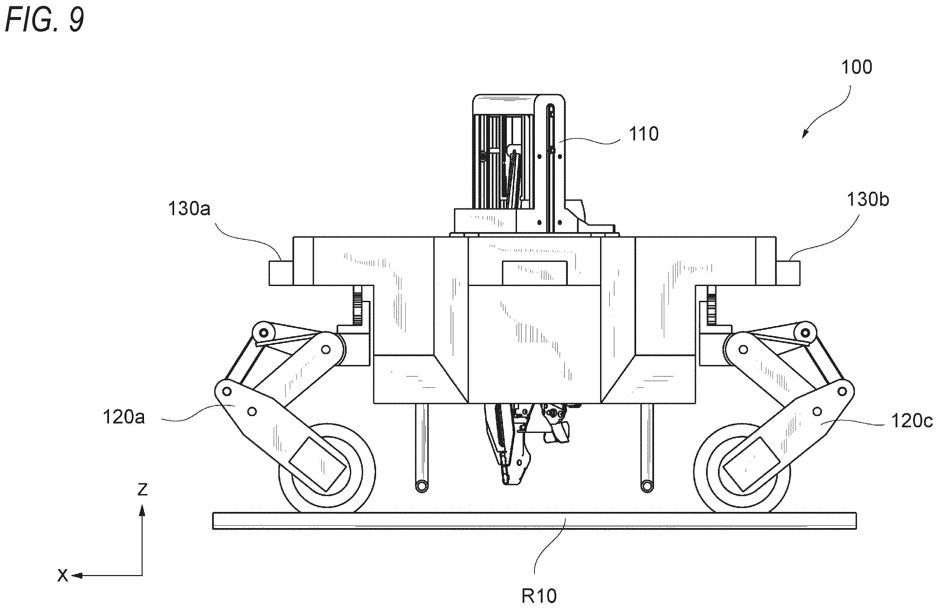

Next, a traveling operation on the reinforcing bar by the reinforcing bar binding robot 100 will be described with reference to FIGS. 8 and 9. FIG. 8 is a diagram of the reinforcing bar binding robot 100 in traveling along the first reinforcing bar R10 as viewed from the Y direction. FIG. 9 is a diagram of the reinforcing bar binding robot 100 in traveling along the first reinforcing bar R10 as viewed from the X direction. **In** FIGS. 8 and 9, the reinforcing bar binding robot 100 travels in the first direction (Y direction). As shown in FIGS. 8 and 9, during the traveling, the reinforcing bar binding robot 100 travels such that the first roller 122a of the first traveling unit 120a is on the first reinforcing bar R12 and the second roller 122b of the second traveling unit 120b is on the first reinforcing bar R14. As shown in FIG. 9, the third roller 122c of the third traveling unit 120c also travels on the first reinforcing bar R12, similarly to the first roller 122a of the first traveling unit 120a. Although not shown in FIGS. 8 and 9, the fourth roller 122d of the fourth traveling unit 120d also travels on the first reinforcing bar R14, similarly to the second roller 122b of the second traveling unit 120b. Accordingly, when the reinforcing bar binding robot 100 according to the embodiment of the present disclosure travels along the first reinforcing bar R10, for example, the reinforcing bar binding robot 100 travels on a certain first reinforcing bar R10 (the first reinforcing bar R12) and a certain first reinforcing bar R10 (the first reinforcing bar R14) disposed two bars away from the first reinforcing bar R12, and binds the intersecting section c12 of the first reinforcing bar R10 and the second reinforcing bar R20 present on the first reinforcing bar R13, which is a first reinforcing bar R10 present between the first reinforcing bar R12 and the first reinforcing bar R14 on which the reinforcing bar binding robot 100 is traveling.

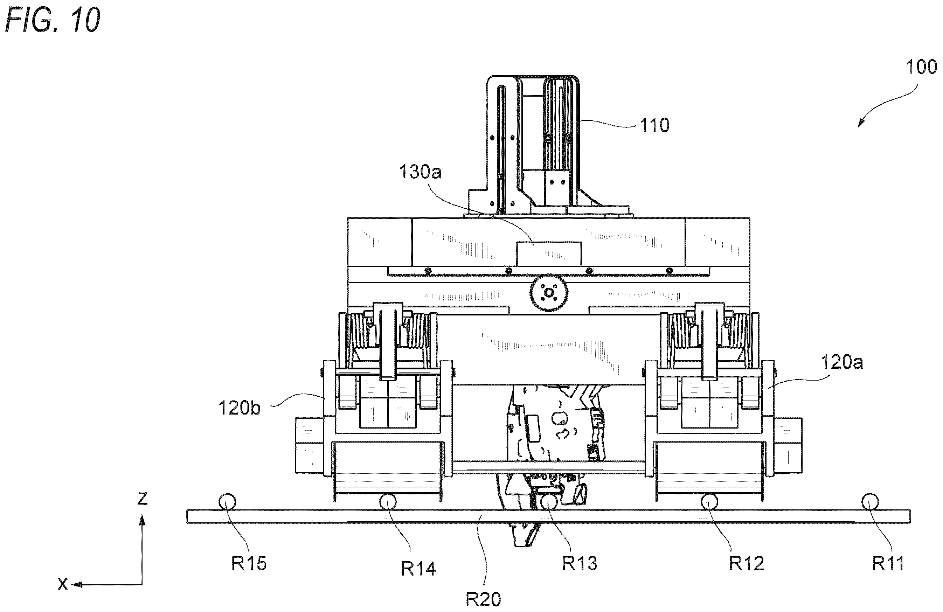

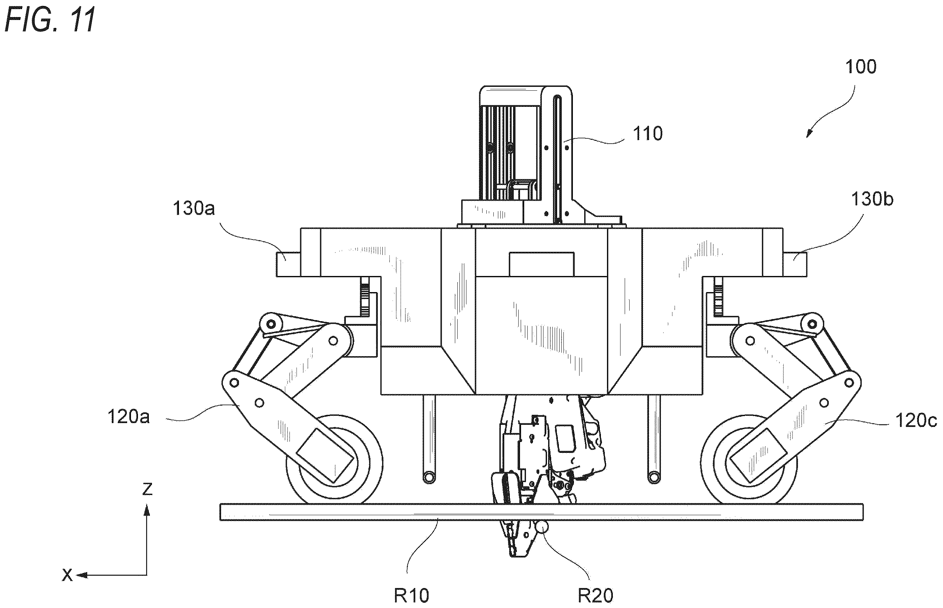

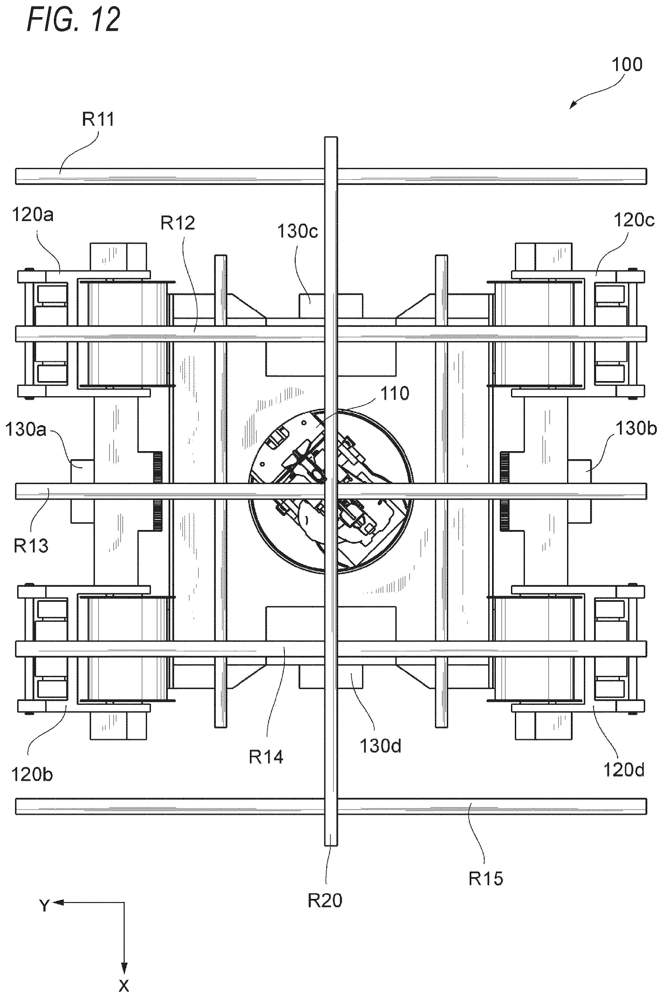

Next, the reinforcing bar binding robot 100 during the reinforcing bar binding work will be described with reference to FIGS. 10, 11, and 12. FIG. 10 is a diagram of the reinforcing bar binding robot 100 that stops traveling and performs a binding work, as viewed from the Y direction. FIG. 11 is a diagram of the reinforcing bar binding robot 100 that performs the binding work as viewed from the X direction. FIG. 12 is a diagram of the reinforcing bar binding robot 100 that performs the binding work as viewed from a lower side in the Z direction. In FIGS. 10, 11, and 12, a case where the reinforcing bar binding robot 100 binds the intersecting section c12 of the first reinforcing bar R13 and the second reinforcing bar R20 is shown as an example, and as illustrated in FIGS. 10 to 12, in the binding work, the reinforcing bar binding robot 100 stops the traveling described above and lowers the reinforcing bar binding unit 110 with reference to FIGS. 8 and 9.

Next, a configuration for calculating positions of the reinforcing bar group R (first reinforcing bars R10 and second reinforcing bars R20) by the reinforcing bar binding robot 100 according to the embodiment of the present disclosure will be described. The reinforcing bar binding robot 100 according to the embodiment of the present disclosure includes: the traveling unit 120 configured to travel on the reinforcing bar group R including the plurality of first reinforcing bars R1 whose extending direction is the Y direction (first direction) and the plurality of second reinforcing bars R2 whose extending direction is the X direction (second direction) intersecting with the Y direction (first direction) and arranged to intersect with the first reinforcing bars R1; the sensor unit 130 configured to detect at least one first reinforcing bar R1 and/or at least one second reinforcing bar R2; and the first reinforcing bar determination unit 164a1 and/or a second reinforcing bar determination unit 164a2 (also referred to as "reinforcing bar position calculation unit" in the present embodiment) configured to calculate the position of the at least one first reinforcing bar R1 and/or the at least one second reinforcing bar R2 detected by the sensor unit 130 based on pixel values of a plurality of pixels constituting a two-dimensional image generated by the detection results of the sensor unit 130. The reinforcing bar binding robot 100 according to the embodiment of the present disclosure can improve efficiency of a calculation process of the positions of the first reinforcing bar R10 and/or the second reinforcing bar R20 by calculating the positions of the first reinforcing bar R10 and/or the second reinforcing bar R20 based on the two-dimensional image generated based on the detection results of the sensor unit 130. For example, as compared with a case where a position of a reinforcing bar is calculated using three-dimensional data as a detection result of a sensor unit, a calculation load can be reduced by performing the calculation based on a two-dimensional image.

In the reinforcing bar binding robot according to the embodiment of the present disclosure, the two-dimensional image used to calculate the positions of the first reinforcing bar R10 and/or the second reinforcing bar R20 may be a grayscale image. In this case, the reinforcing bar binding robot 100 may include the storage device 190 that stores information on at least one template image including partial images of the first reinforcing bar R10 and/or the second reinforcing bar R20, the above two-dimensional image may include a grayscale image, and the first reinforcing bar determination unit 164a1 and/or the second reinforcing bar determination unit 164a2 (reinforcing bar position calculation unit) may be configured to calculate the position of the at least one first reinforcing bar R10 and/or the at least one second reinforcing bar R20 by comparing the grayscale image with the template image.

In the reinforcing bar binding robot according to the embodiment of the present disclosure, when a grayscale value of a pixel in the grayscale image is equal to or greater than a predetermined threshold, it may be determined that the pixel corresponds to the first reinforcing bar R10 and/or the second reinforcing bar R20. In this case, if the grayscale value of the pixel constituting the grayscale image is equal to or greater than the predetermined threshold (first threshold), the first reinforcing bar determination unit 164a1 and/or the second reinforcing bar determination unit 164a2 (reinforcing bar position calculation unit) may determine that at least a part of the first reinforcing bar R1 and/or at least a part of the second reinforcing bar R2 are present at a position corresponding to the pixel having the grayscale value equal to or greater than the predetermined threshold. Alternatively, when the grayscale image is used as the two-dimensional image, the grayscale image may be generated by decreasing an image grayscale of a region where an object is present and increasing an image grayscale of a region where the object is not present, and in this case, if the grayscale value of the pixel is less than the predetermined threshold, it may be determined that the pixel corresponds to the first reinforcing bar R10 and/or the second reinforcing bar R20.

In the reinforcing bar binding robot 100 according to the embodiment of the present disclosure, the grayscale image may be generated based on a detection result of a three-dimensional sensor. In this case, the sensor unit 130 may include a three-dimensional sensor capable of detecting x-coordinates, y-coordinates, and z-coordinates of a plurality of points on a surface of an object to be detected, a value of the z-coordinate detected by the three-dimensional sensor may be converted into an image grayscale that differs depending on a size of the value of the z-coordinate, and the grayscale image may be generated by constituting the two-dimensional image based on the x-coordinates, the y-coordinates, and the image grayscales.

Alternatively, the reinforcing bar binding robot 100 according to the embodiment of the present disclosure may be configured such that the sensor unit 130 captures a grayscale image. In this case, the sensor unit 130 may include an imaging device, and the grayscale image may be generated based on an image captured by the imaging device.

The reinforcing bar binding robot 100 according to the embodiment of the present disclosure may calculate the positions of the first reinforcing bar R10 and/or the second reinforcing bar R20 based on a matching degree. In this case, the first reinforcing bar determination unit 164a1 and/or the second reinforcing bar determination unit 164a2 (reinforcing bar position calculation unit) may be configured to calculate the position of the at least one first reinforcing bar R10 and/or the at least one second reinforcing bar R20 based on a matching degree between the grayscale image and the template image.

In the embodiment of the present disclosure, the matching degree may be calculated by, for example, the detection result of the sensor unit 130, and comparing the two-dimensional image generated based on the detection result of the sensor unit 130 or with the template image. For example, pixel values of all pixels in the partial image to be compared in the two-dimensional image generated based on the detection results of the sensor unit 130 may be compared with pixel values of all pixels in the template image, and based on whether the pixel values of the pixels corresponding to each other in the two images to be compared match, a ratio of matching pixels represented by percentage or the like may be calculated as the matching degree. For example, if a template image including 50,000 pixels is compared with a grayscale image including 50,000 pixels, and grayscales of 40,000 pixels in the two images match or grayscales of most pixels match (for example, a difference between the two images is within 10%), the matching degree may be calculated to be 80%.

In this case, the positions of the first reinforcing bar R10 and/or the second reinforcing bar R20 may be calculated using a reference value of the matching degree. In this case, the first reinforcing bar determination unit 164a1 and/or the second reinforcing bar determination unit 164a2 (reinforcing bar position calculation unit) may determine whether the matching degree is equal to or greater than a predetermined reference value, and determine that the first reinforcing bar R10 and/or the second reinforcing bar R20 are present within a detection range of the sensor unit 130 if the matching degree is equal to or greater than the predetermined reference value.

In the reinforcing bar binding robot 100 according to the embodiment of the present disclosure, a value that varies depending on the height may be set as the reference value of the matching degree. In this case, the reinforcing bar binding robot 100 according to the embodiment of the present disclosure may include the robot height calculation unit 164e (also referred to as a "robot height calculation unit" in the present embodiment) configured to calculate the height of the reinforcing bar binding robot 100 from the reinforcing bar group R. The predetermined reference value may include a plurality of reference values corresponding to different heights of the reinforcing bar binding robot 100. The first reinforcing bar determination unit 164a1 and/or the second reinforcing bar determination unit 164a2 (reinforcing bar position calculation unit) may determine whether a reference value corresponding to the height of the reinforcing bar binding robot 100 from the reinforcing bar group R calculated by the robot height calculation unit 164e (robot height calculation unit) is present in the plurality of reference values. If it is determined that the reference value corresponding to the height of the reinforcing bar binding robot 100 is present in the plurality of reference values, the positions of the first reinforcing bar R10 and/or the second reinforcing bar R20 may be calculated based on the reference value, and if it is determined that the reference value corresponding to the height of the reinforcing bar binding robot 100 is not present in the plurality of reference values, a new reference value corresponding to the measured height of the reinforcing bar binding robot 100 may be calculated based on at least two reference values in the plurality of reference values.

In the embodiment of the present disclosure, for example, the plurality of reference values may be set for different predetermined heights of the reinforcing bar binding robot 100 from the reinforcing bar group R. For example, five reference values may be set for the five heights of the reinforcing bar binding robot 100 from the reinforcing bar group R every 5 cm from 10 cm to 30 cm. In this case, for example, if the robot height calculation unit 164e determines that the height of the reinforcing bar binding robot 100 from the reinforcing bar group R is 20 cm, when the reference value is set to 60% for the height of 20 cm, 60% may be used as the reference value. For example, when no reference value for 23 cm is set if the robot height calculation unit 164e determines that the height of the reinforcing bar binding robot 100 from the reinforcing bar group R is 23 cm, a new reference value may be set based on, for example, a reference value for 20 cm and a reference value for 25 cm. For example, if a reference value for the height of 20 cm is 60% and a reference value for the height of 25 cm is 50%, the reference value for 23 cm may be calculated by linear interpolation as 50% + (((60% - 50%) * ((25 cm - 23 cm)/(25 cm - 20 cm))) = 54%. The newly calculated reference value may be stored in the storage device 190 for example, and may be used in a subsequent work as necessary. The methods for calculating the height, the reference value, and the new reference value described above are examples and the present disclosure is not limited thereto. For example, more reference values may be set, and for example, a reference value may be set for a height of less than 10 cm or greater than 30 cm.

Hereinafter, a calculation process of the position of the reinforcing bar performed by the reinforcing bar binding robot according to the embodiment of the present disclosure will be described.

First, a specific example of the sensor unit 130 used in the reinforcing bar binding robot 100 will be described in detail. As the sensor unit 130, for example, a 3D distance camera such as a Time of Flight (ToF) camera can be used (for example, TOF cam-635 manufactured by ESPROS Photonics). By the 3D distance camera, for example, an image having different grayscales depending on a separation distance of each imaged object from the camera is output, a distance to the target imaged object is acquired for each pixel, and it is possible to show a closer object as one having a higher grayscale (close to black) and a farther object as one having a lower grayscale (close to white). In the embodiment of the present disclosure, since the distance between the reinforcing bar binding robot 100 and the reinforcing bar group R does not substantially change while the reinforcing bar binding robot 100 is traveling on the reinforcing bar group R, the reinforcing bars may be detected by recognizing an object relatively close and black as a reinforcing bar (first reinforcing bar R10 and/or second reinforcing bar R20).

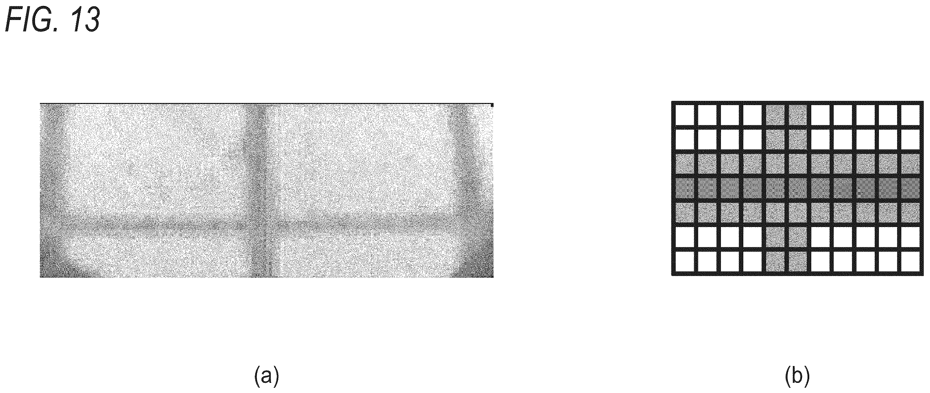

FIG. 13 shows an image output by the 3D distance camera. (a) of FIG. 13 shows an image of a vicinity of an intersecting section of the first reinforcing bar R10 and the second reinforcing bar R20 captured by the 3D distance camera. (b) of FIG. 13 schematically shows an image of the vicinity of the intersecting section of the first reinforcing bar R10 and the second reinforcing bar R20. As shown in (a) of FIG. 13, different grayscales appear in the image captured by the 3D distance camera, and in the embodiment of the present disclosure, it is possible to recognize portions having a high grayscale as the first reinforcing bar R10 and/or the second reinforcing bar R20. As schematically shown in (b) of FIG. 13, an image including pixels with different grayscales is obtained.

The sensor unit 130 is not limited to the imaging device such as a camera exemplified above, and other sensors may be used. For example, a laser or the like capable of acquiring information on a depth direction or a height direction may be used. For example, a two-dimensional image using the same image grayscales as described above may be generated based on the information on the depth direction acquired by a laser.

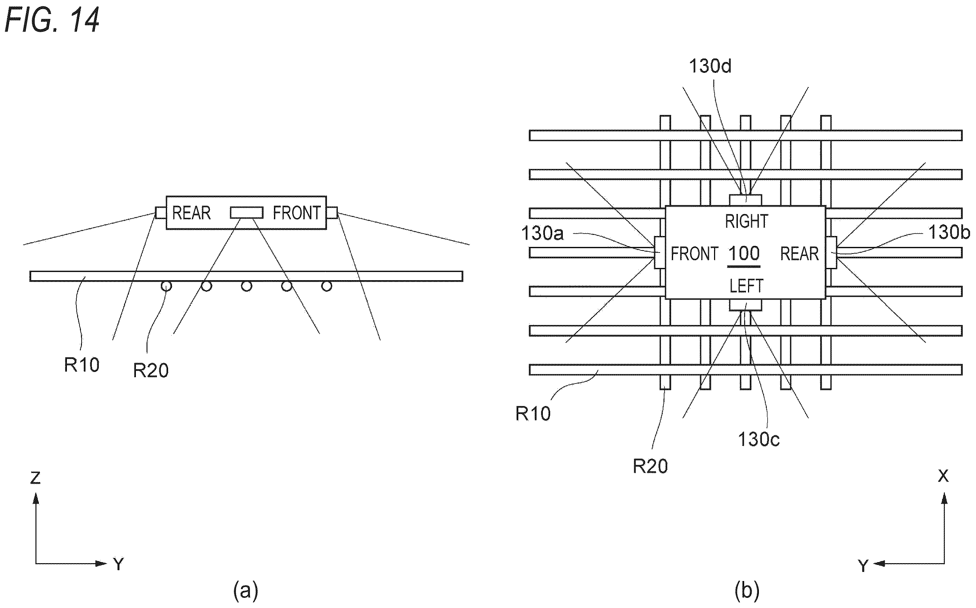

Next, a process of detecting reinforcing bars based on an image (grayscale image in the present embodiment) captured and acquired by the sensor unit 130 will be described. First, arrangement of the first sensor 130a, the second sensor 130b, the third sensor 130c, and the fourth sensor 130d of the sensor 130 will be described with reference to FIG. 14. FIG. 14 is a diagram schematically showing the arrangement of the first sensor 130a, the second sensor 130b, the third sensor 130c, and the fourth sensor 130d. (a) of FIG. 14 is a schematic side view of the reinforcing bar binding robot 100 as viewed from the horizontal direction (X direction). (b) of FIG. 14 is a schematic top view of the reinforcing bar binding robot 100 as viewed from the upper direction (the upper side in the Z direction). (a) of FIG. 14 schematically shows the first sensor 130a, the second sensor 130b, and the third sensor 130c together with imaging ranges of the first sensor 130a, the second sensor 130b, and the third sensor 130c. As schematically shown in (a) of FIG. 14 and (b) of FIG. 14, the first sensor 130a and the second sensor 130b, which are arranged away from each other in the Y direction, are arranged to capture images obliquely downward. Similarly, the third sensor 130c and the fourth sensor 130d (not shown) are arranged to capture images obliquely downward. For example, the first sensor 130a and the second sensor 130b are set such that an angle of view defining the imaging range is 80° or more and 100° or less. An angle of view of the third sensor 130c and the fourth sensor 130d is set to, for example, 50° or more and 70° or less. Any of the sensors 130 may be set to have other angles of view. As described above, when the determination on a foreign matter is performed based on the detection results of the first sensor 130a, the second sensor 130b, the third sensor 130c, and/or the fourth sensor 130d, the imaging ranges of the sensors may be changed by, for example, orienting each sensor at an upward angle.

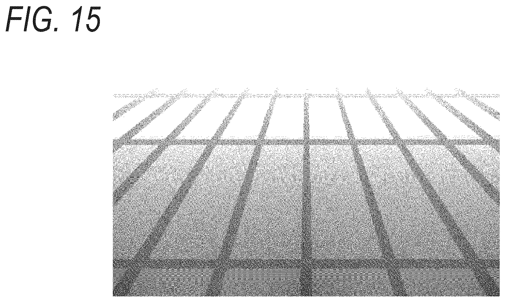

FIG. 15 schematically shows an image captured by the first sensor 130a. As shown in FIG. 15, in the embodiment of the present disclosure, since the first sensor 130a is disposed to capture an image of an obliquely lower direction, the interval between the adjacent first reinforcing bars R10 becomes narrower from a front side to a back side. In the embodiment of the present disclosure, the positions of the reinforcing bars (the plurality of first reinforcing bars R10 and the plurality of second reinforcing bars R20) constituting the reinforcing bar group R can be detected by, for example, performing the template matching based on the image obtained in this way. In the embodiment of the present disclosure, for example, by the template matching, the reinforcing bars (first reinforcing bars R10 and/or second reinforcing bars R20) are detected based on a similarity (also referred to as the "matching degree" in the present embodiment) between the captured image and an image prepared in advance, a grayscale image including grayscale sections corresponding to the reinforcing bars is prepared as a template, the image captured by each sensor unit 130 is scanned, and a similarity in a scanning direction is calculated.

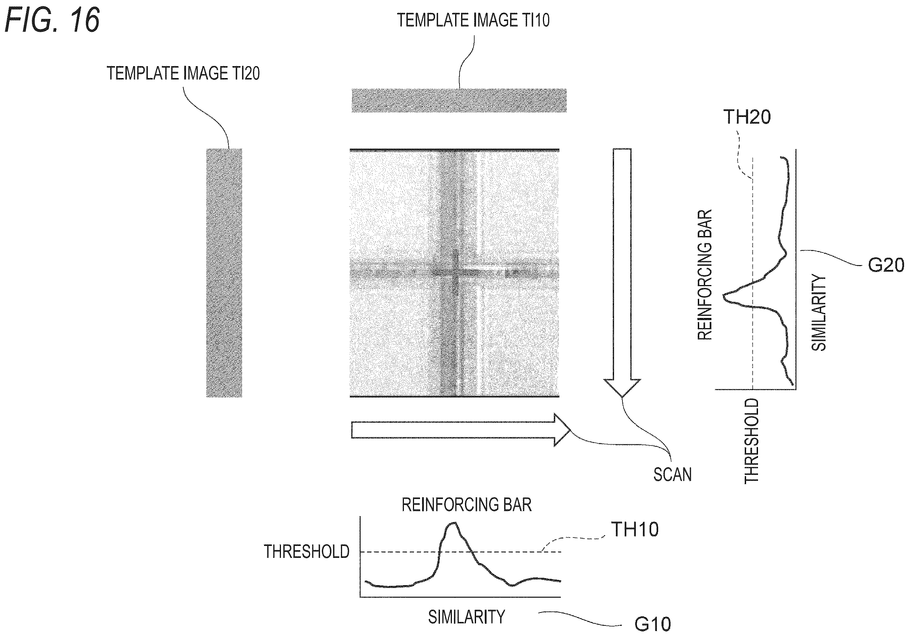

The template matching performed in the embodiment of the present disclosure will be described with reference to FIG. 16. FIG. 16 is a schematic diagram for illustrating the template matching according to the present embodiment. FIG. 16 shows a captured image of the vicinity of the intersecting section c12 of the first reinforcing bar R10 and the second reinforcing bar R20, together with template images TI10 and TI20 for scanning in the X direction and the Y direction. FIG. 16 shows the template images TI10 and TI20, together with schematic graphs G10 and G20 of similarities calculated in response to the scanning. By scanning the template images TI10 and TI20 in the Y direction and the X direction, respectively, and calculating the similarities with the template images TI10 and TI20, it is determined that a section where a maximum value of the calculated similarity exceeds a threshold in the captured image corresponds to the position where the reinforcing bar is present. As shown in the graphs G10 and G20, in distribution of the similarities along the Y direction and the X direction, portions exceeding thresholds TH10 and TH20 are confirmed as corresponding to the positions where the reinforcing bars are present. The similarity (matching degree) may be calculated by, for example, comparing a color density of each pixel of the captured image with a color density of each pixel constituting the template image. For example, first, a distance to an object of each of the pixels of the captured image is extracted as the color density. Next, if a total value or an average value of the color densities of the entire captured image is low (for example, lower than a predetermined threshold), it is determined that there is no reinforcing bar in the captured image. On the other hand, if the color density is high (for example, higher than a predetermined threshold), a difference between the extracted color density and the color density of each pixel constituting the template image is compared. Among the pixels of the captured image, a position where a sum of absolute values of differences between the color densities of the pixels of the captured pixel and the color densities of the pixels constituting the template image is lowest may be extracted as a reinforcing bar position. Accordingly, the first reinforcing bar R10 and the second reinforcing bar R20 can be detected by the template matching based on the similarity calculated by scanning the captured image with respect to the template image.

As described above with reference to FIG. 15, in the embodiment of the present disclosure, in the image captured by the first sensor 130a, the interval between the first reinforcing bars R10 adjacent to each other in the X direction changes along the Y direction. Similarly, in the image captured by the second sensor 130b, the interval between the first reinforcing bars R10 in the X direction also changes in the Y direction, and in the images captured by the third sensor 130c and the fourth sensor 130d, the interval in the Y direction between the captured second reinforcing bars R20 changes along the X direction. Therefore, for example, the template matching may be performed after the image is corrected such that the intervals between the reinforcing bars on the captured image become substantially equal by performing orthographic transformation on the captured image. The detection of the reinforcing bars based on the template matching can also be performed by preparing, as a template, an image in which the interval between the reinforcing bars changes as shown in FIG. 15 without performing image conversion such as the orthographic transformation.

In the template matching according to the embodiment of the present disclosure, for example, frequency analysis may be performed on the images, and a relevance between the captured image and the template image may be evaluated by using a phase correlation method.

The positions of the first reinforcing bar R10 and the second reinforcing bar R20 can also be estimated by, for example, using a three-dimensional sensor to obtain three-dimensional data in XYZ directions of an object within a detection range. As described above, in the reinforcing bar binding robot 100 according to the embodiment of the present disclosure, by performing the template matching in which the third-dimensional data in the Z direction is treated as the information on the grayscale of the pixel, a calculation amount of calculating the position of the intersecting section c12 can be made smaller as compared with the case where the calculation is performed based on, for example, three-dimensional data in the XYZ directions. As in the reinforcing bar binding robot 100 according to the embodiment of the present disclosure, when performing the binding work at the intersecting section c12 while traveling, a method for determining the position of the reinforcing bar by the template matching that can reduce the calculation amount is preferably used.

Next, a method for determining the intersecting section of the first reinforcing bar R10 and the second reinforcing bar R20 in the embodiment of the present disclosure will be described. In the embodiment of the present disclosure, when the reinforcing bar binding robot 100 determines the intersecting section c12 of the first reinforcing bar R10 and the second reinforcing bar R20, the first sensor 130a and the second sensor 130b may be configured to detect the first reinforcing bar R10 as described above. That is, as described above, the reinforcing bar binding robot 100 includes the reinforcing bar binding unit 110 configured to bind the intersecting section c12 of the first reinforcing bar R10 and the second reinforcing bar R20 of the reinforcing bar group R, and the sensor units 130 are arranged away from each other along the third direction, and include the first sensor 130a and the second sensor 130b configured to detect at least the first reinforcing bars R10. The at least one template image includes the template image TI10 (first template image) including a partial image of the first reinforcing bar R10. The reinforcing bar binding robot 100 is disposed such that the traveling unit 120 advances in the Y direction (first direction) and the direction (third direction) along which the first sensor 130a and the second sensor 130b are arranged is parallel to the Y direction (first direction). The first reinforcing bar determination unit 164al and/or the second reinforcing bar determination unit 164a2 (reinforcing bar position calculation unit) calculate the position of the first reinforcing bar R10 by comparing the detection results of the first sensor 130a and/or the second sensor 130b with the first template image, and the reinforcing bar binding unit 110 may bind the intersecting section c12 on the first reinforcing bar R10 whose position is calculated.

In this case, the reinforcing bar binding robot 100 may be further configured such that the third sensor 130c and the fourth sensor 130d detect the second reinforcing bar R20 in addition to the first reinforcing bar R10 to estimate the intersecting section c12. That is, the reinforcing bar binding robot 100 further includes the intersecting section calculation unit 166 (also referred to as the "intersecting section estimation unit" in the present embodiment) configured to estimate the intersecting section c12. The sensor unit 130 includes the third sensor 130c and the fourth sensor 130d arranged away from each other along the fourth direction intersecting with the third direction, and configured to detect at least the second reinforcing bar R20. The at least one template image includes the template image TI20 (second template image) including the partial image of the second reinforcing bar R20. The reinforcing bar binding robot 100 is disposed such that the fourth direction is parallel to the X direction (second direction). The first reinforcing bar determination unit 164a1 and/or the second reinforcing bar determination unit 164a2 (reinforcing bar position calculation unit) calculate the position of the second reinforcing bar R20 by comparing the detection results of the third sensor 130c and/or the fourth sensor 130d with the second template image. The intersecting section estimation unit (intersecting section estimation unit) estimates an intersection point of the calculated first reinforcing bar R10 and the calculated second reinforcing bar R20 as the intersecting section c12, and the reinforcing bar binding unit 110 may be configured to bind the estimated intersecting section c12.

When the reinforcing bar binding robot 100 detects the end R10e of the first reinforcing bar R10, the reinforcing bar binding robot 100 may cause the third sensor 130c and/or the fourth sensor 130d to detect the first reinforcing bar R10, and may be used to calculate a lateral movement amount of the reinforcing bar binding robot 100 described later based on the first reinforcing bar R10 detected by the third sensor 130c and/or the fourth sensor 130d. That is, the reinforcing bar binding robot 100 includes the movement amount calculation unit 174 (movement amount calculation unit) configured to calculate the movement amount of the traveling unit 120 based on the position information on the first reinforcing bar R10 calculated by the first reinforcing bar determination unit 164al and/or the second reinforcing bar determination unit 164a2 (reinforcing bar position calculation unit) when the traveling unit 120 moves from the first reinforcing bar R10 on which the traveling unit 120 is traveling to another first reinforcing bar R10. The first reinforcing bar determination unit 164a1 and/or the second reinforcing bar determination unit 164a2 (reinforcing bar position calculation unit) calculate, based on the detection results of the first sensor 130a and/or the second sensor 130b, the position of the first reinforcing bar R10 on which the traveling unit 120 is traveling, and determines whether the matching degree is equal to or greater than a predetermined end reference value if the matching degree of the detection result of the first sensor 130a is less than the predetermined reference value. If it is determined that the matching degree is equal to or greater than the predetermined end reference value, it is determined that the end R10e of the first reinforcing bar R10 is present within the detection range of the first sensor 130a, and if it is determined that the end R10e of the first reinforcing bar R10 is present within the detection range of the first sensor 130a, the third sensor 130c and/or the fourth sensor 130d are set to detect the first reinforcing bar R10. The first reinforcing bar determination unit 164a1 and/or the second reinforcing bar determination unit 164a2 (reinforcing bar position calculation unit) calculate the position of another first reinforcing bar R10 that is away in the X direction (second direction) from the first reinforcing bar R10 on which the traveling unit 120 is traveling, based on the detection results of the third sensor 130c and/or the fourth sensor 130d. The movement amount calculation unit 174 (movement amount calculation unit) calculates the movement amount of the traveling unit 120 in the X direction (second direction) based on the position of the another first reinforcing bar R10 calculated by the first reinforcing bar determination unit 164a1 and/or the second reinforcing bar determination unit 164a2 (reinforcing bar position calculation unit) and the position of the first reinforcing bar R10 on which the traveling unit 120 is traveling. The traveling unit 120 may be configured to move in the X direction (second direction) based on the calculated movement amount in the X direction (second direction).

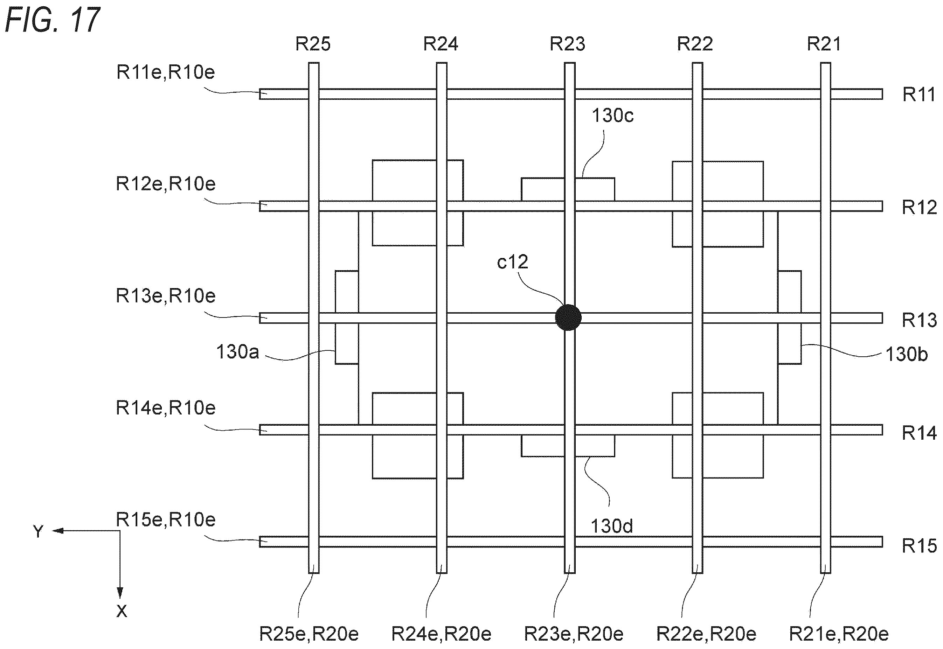

A method for estimating the intersecting section of the first reinforcing bar R10 and the second reinforcing bar R20 will be described with reference to FIG. 17. FIG. 17 is a diagram schematically showing the reinforcing bar binding robot 100 as viewed from the lower side in the Z direction for illustrating the method for estimating the intersecting section. As shown in FIG. 17, for example, in the embodiment of the present disclosure, the reinforcing bar binding robot 100 is configured to travel on the two reinforcing bars, that is, the first reinforcing bar R12 and the first reinforcing bar R14 as described above, and is configured such that the first sensor 130a and the second sensor 130b detect the first reinforcing bar R13, and the third sensor 130c and the fourth sensor 130d detect the second reinforcing bar R20. In the example shown in FIG. 17, for example, the third sensor 130c and the fourth sensor 130d detect a second reinforcing bar R23. In this case, the first reinforcing bar R13 extending between the first sensor 130a and the second sensor 130b is estimated based on the detection results of the first sensor 130a and the second sensor 130b, and the second reinforcing bar R23 extending between the third sensor 130c and the fourth sensor 130d is estimated based on the detection results of the third sensor 130c and the fourth sensor 130d. A section where the estimated first reinforcing bar R13 extending between the first sensor 130a and the second sensor 130b and the estimated second reinforcing bar R23 extending between the third sensor 130c and the fourth sensor 130d intersect with each other is estimated as the intersecting section c12.

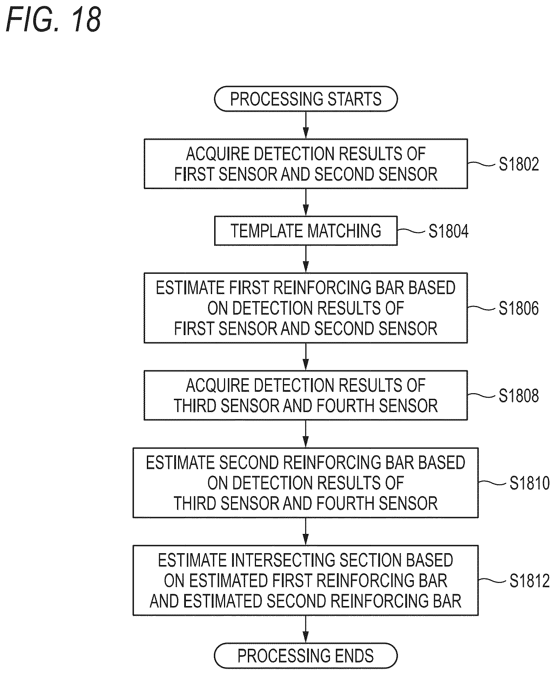

A method for estimating the intersecting section c12 in the embodiment of the present disclosure will be described with reference to FIG. 18. FIG. 18 is a flowchart of the method for estimating the intersecting section c12 in the embodiment of the present disclosure.

First, the detection results of the first sensor 130a and the second sensor 130b are acquired (S1802).

Next, the template matching is executed based on the detection results of the first sensor 130a and the second sensor 130b to confirm the first reinforcing bar R10 and/or the second reinforcing bar R20 detected by the first sensor 130a and the second sensor 130b (S1804).

The position of the first reinforcing bar R13 is estimated based on the detection results of the first sensor 130a and the second sensor 130b (S1806).

Subsequently, the detection results of the third sensor 130c and the fourth sensor 130d are acquired (S1808).

Next, the position of the second reinforcing bar R20 is estimated based on the detection results of the third sensor 130c and the fourth sensor 130d (S1810).

Subsequently, the intersecting section is estimated based on the estimated positions of the first reinforcing bar R13 and the second reinforcing bar R20 (S1812).

Accordingly, the reinforcing bar binding robot 100 according to the embodiment of the present disclosure is disposed on the reinforcing bar group R such that the third direction (Y direction) along which the first sensor 130a and the second sensor 130b are arranged is parallel to the first direction that is the extending direction of the first reinforcing bar R10, and the fourth direction along which the third sensor 130c and the fourth sensor 130d are arranged is parallel to the second direction that is the extending direction of the second reinforcing bar R20, and includes the intersecting section calculation unit 166, which is the intersecting section estimation unit, that estimates the intersecting section c12. The first sensor 130a and the second sensor 130b are configured to detect the first reinforcing bar R10, and the third sensor 130c and the fourth sensor 130d are configured to detect the second reinforcing bar R20. The intersecting section calculation unit 166, which is the intersecting section estimation unit, may be configured to estimate the position of the first reinforcing bar R10 (first reinforcing bar R13) detected by either the first sensor 130a or the second sensor 130b based on the detection results of the first sensor 130a and the second sensor 130b, estimate the position of the second reinforcing bar R20 (second reinforcing bar R23) detected by either the third sensor 130c or the fourth sensor 130d based on the detection results of the third sensor 130c and the fourth sensor 130d, and estimate the intersection point of the first reinforcing bar R13 detected by the first sensor 130a and the second sensor 130b and the second reinforcing bar R23 detected by the third sensor 130c and the fourth sensor 130d as the intersecting section c12.

When the reinforcing bar binding robot 100 calculates the position of the intersecting section c12 of the first reinforcing bar R10 and the second reinforcing bar R20 on the first reinforcing bar R13, the first sensor 130a may pass the intersecting point (intersecting portion cp12), for example. In this case, for example, the calculated position of the intersecting section c12 may be adjusted based on the information on the intersecting portion cp12 captured by the first sensor 130a. That is, the reinforcing bar binding robot 100 may be configured to advance in the first direction (Y direction) while the first sensor 130a and the second sensor 130b detecting the first reinforcing bar R10, and if the first sensor 130a detects the intersecting portion cp12 where the first reinforcing bar R10 intersects with the second reinforcing bar R20 while the reinforcing bar binding robot 100 is advancing, the reinforcing bar binding robot 100 may determine whether the intersecting portion cp12 matches the estimated intersecting section c12, and if the intersecting portion cp12 does not match the estimated intersecting section c12, the reinforcing bar binding robot 100 may adjust the position of the estimated intersecting section c12. If the detected position of the intersecting portion cp12 does not match the estimated position of the intersecting section c12, the position of the reinforcing bar binding robot 100 may be adjusted by accelerating or decelerating the first traveling unit 120a, the second traveling unit 120b, the third traveling unit 120c, and/or the fourth traveling unit 120d of the traveling unit 120, or controlling the rotation speeds of the first wheel drive motor 124a, the second wheel drive motor 124b, the third wheel drive motor 124c, and the fourth wheel drive motor 124d, same as the method for causing the reinforcing bar binding robot 100 to follow the first reinforcing bar R10 described above, for example.

The method for estimating the intersecting section described above with reference to FIG. 18 is an example, and is not limited to the example described above. For example, the acquisition of the detection results of the sensors may not be executed in the above order, and the estimation of the position of the reinforcing bar based on the detection results may not be executed in the above order.

Next, a method for calculating the movement amount of the reinforcing bar binding robot 100 in the embodiment of the present disclosure will be described. With reference to FIG. 17, a case where the reinforcing bar binding robot 100 reaches the vicinity of the end R10e of the first reinforcing bar R10 in the Y direction and performs the lateral movement (movement in the X direction) will be described as an example. As shown in FIG. 17, the reinforcing bar binding robot 100 travels on the first reinforcing bar R12 and the first reinforcing bar R14, binds a section where the first reinforcing bar R13 present between the first reinforcing bar R12 and the first reinforcing bar R14 intersects with the second reinforcing bar R20 (for example, second reinforcing bars R21, R22, R23, R24, and R25), and reaches the vicinities of the end R12e, the end R13e, and the end R14e. In this case, the reinforcing bar binding robot 100 next executes the binding work on the first reinforcing bar R14 adjacent in the X direction to the first reinforcing bar R13 on which the binding work has been executed, and therefore moves in the X direction (a direction from the first reinforcing bar R13 toward the first reinforcing bar R14).

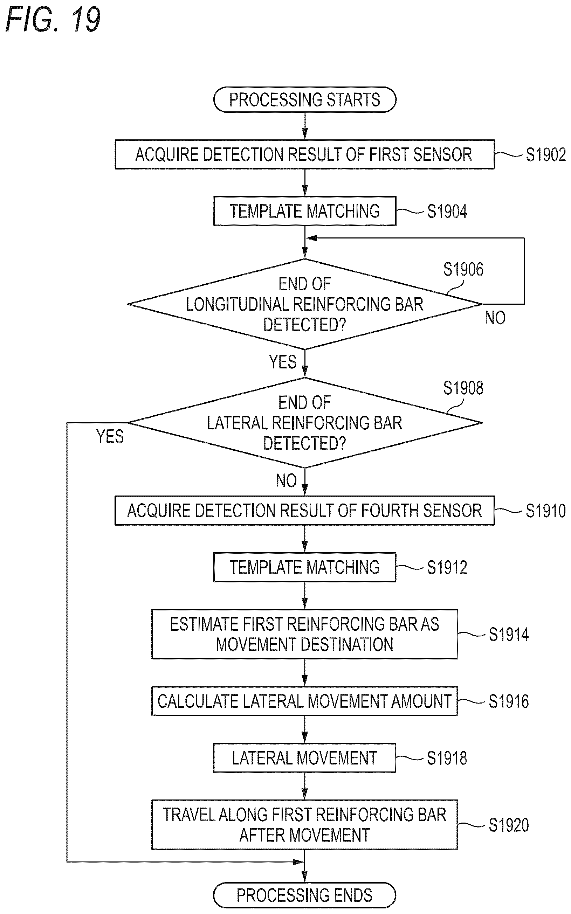

A method for the lateral movement of the reinforcing bar binding robot 100 in this case will be described with reference to FIG. 19. FIG. 19 is a flowchart related to the lateral movement of the reinforcing bar binding robot 100.

First, the detection result of the first sensor 130a is acquired (S1902).

Next, the template matching is performed on the detection result of the first sensor 130a (S1904).

Next, it is determined whether the end R13e of the first reinforcing bar R13 to be detected by the first sensor 130a is detected, based on the result of the template matching (S1906).

Subsequently, it is determined whether an end of the second reinforcing bar R20 is detected (S1908). As the end R20e of the second reinforcing bar R20, for example, as shown in FIG. 17, it may be determined whether any of ends R21e, R22e, R23e, R24e, and R25e of the second reinforcing bars R21, R22, R23, R24, and R25 is detected.

For example, it may be determined whether the end R20e of the second reinforcing bar R20 is detected based on the detection results of the third sensor 130c and/or the fourth sensor 130d. In the embodiment of the present disclosure, the reinforcing bar binding robot 100 performs the binding work at the intersecting sections of the first reinforcing bars R10 and the second reinforcing bars R20 from the first reinforcing bar R10 on the X axis left side toward the first reinforcing bar R10 on the X axis right side as viewed from the upper side in the Z direction. Therefore, it may be determined whether the end R20e of the second reinforcing bar R20 on the right side in the X direction is detected based on the detection result of the fourth sensor 130d provided on the right side in the X direction as viewed from the upper side in the Z direction. For example, when the end R20e of the second reinforcing bar R20 on the right side in the X direction is detected by the fourth sensor 130d, there is a possibility that the binding work on the last first reinforcing bar R10 is completed, and therefore the binding work on the reinforcing bar group R as a work target may be ended. The detection of the end R20e is not limited thereto, and for example, the determination may be performed based on the detection results of other sensors, and when the binding work is performed from the first reinforcing bar R10 on the right side in the X direction toward the first reinforcing bar R10 on the left side in the X direction, the end R20e of the second reinforcing bar R20 on the left side in the X direction may be detected by the third sensor 130c. The binding work may be configured to be ended based on a condition other than the detection of the end R20e. For example, it is also possible to set a condition to start the binding work on other reinforcing bars at a section other than the end R20e and move the reinforcing bar binding robot 100, or it is also possible to change the binding position due to occurrence of a matter such as foreign matter detection, change the reinforcing bar subjected to the binding work, and move the reinforcing bar binding robot 100. The first sensor 130a and/or the second sensor 130b can also detect the second reinforcing bar R20 by adjusting, for example, the arrangement section, the inclination, and the angle of view thereof, and thus the detection of the end R20e of the second reinforcing bar R20 may be executed using the detection results of the first sensor 130a and/or the second sensor 130b.

Next, the detection result of the fourth sensor 130d is acquired (S1910).

Subsequently, the template matching is performed based on the detection result of the fourth sensor 130d (S1912).

Next, the first reinforcing bar R10 as a movement destination of the reinforcing bar binding robot 100 is estimated based on the position of the first reinforcing bar R10 detected by the fourth sensor 130d (S1914). In the embodiment of the present disclosure, the fourth sensor 130d detects the plurality of first reinforcing bars R10. For example, in the example shown in FIG. 17, the fourth sensor 130d may detect the first reinforcing bar R14 present on the right side of the reinforcing bar binding robot 100 in the X direction. Since the binding work on the intersecting sections c12 of the first reinforcing bars R10 and the second reinforcing bars R20 along the first reinforcing bar R13 has been executed, next, when the binding work on the intersecting sections along the first reinforcing bar R14 is executed, the reinforcing bar binding robot 100 performs the lateral movement to travel on the first reinforcing bar R13 and the first reinforcing bar R15, for example. For example, the lateral movement of moving the reinforcing bar binding robot 100 in the X direction may be performed so that the first traveling unit 120a and the third traveling unit 120c travel on the first reinforcing bar R13 and the second traveling unit 120b and the fourth traveling unit 120d travel on the first reinforcing bar R15.

Subsequently, the lateral movement amount is calculated (S1918). The lateral movement amount of the reinforcing bar binding robot 100 may be calculated by the following method. For example, as described above, when the reinforcing bar binding robot 100 moves to the right side in the X direction as viewed from the upper side in the Z direction, that is, moves toward a direction where the fourth sensor 130d is disposed, calculation may be performed based on two pieces of information, that is, a distance of the fourth sensor 130d in the X direction from the center of the reinforcing bar binding robot 100 in the X direction and a distance of the first reinforcing bar R14 detected by the fourth sensor 130d from the fourth sensor 130d. In the case of calculating the distance of the fourth sensor 130d in the X direction from the center of the reinforcing bar binding robot 100 in the X direction, the center of the reinforcing bar binding robot 100 in the X direction may be, for example, a position where the reinforcing bar binding unit 110 is disposed. Alternatively, the binding position by the reinforcing bar binding unit 110 may be regarded as the center of the reinforcing bar binding robot 100 in the X direction. In this case, for example, the position in the X direction of the first reinforcing bar R13, which is subjected to the binding work performed by the reinforcing bar binding robot 100, may be determined as a center position of the reinforcing bar binding robot 100 in the X direction. The center position of the reinforcing bar binding robot 100 in the X direction and a distance of the fourth sensor 130d from the center position of the reinforcing bar binding robot 100 in the X direction (distance in the X direction) may be calculated in advance and stored in the storage device 190. **In** the configuration in which the position of the sensor unit 130 can be changed, for example, when the position of the fourth sensor 130d is changed according to a construction site or the like, a direction in which and an amount by which the fourth sensor 130d has been moved may be calculated, and the distance of the fourth sensor 130d in the X direction from the center of the reinforcing bar binding robot 100 in the X direction may be calculated in consideration of the movement amount of the fourth sensor 130d. The distance of the first reinforcing bar R14 detected by the fourth sensor 130d from the fourth sensor 130d may be calculated based on, for example, an image captured by the fourth sensor 130d. For example, when the fourth sensor 130d is mounted at a position 100 away in the X direction from the center of the reinforcing bar binding robot 100 in the X direction (for example, the position of the first reinforcing bar R13) and the first reinforcing bar R14 is at a position 20 away from the fourth sensor 130d in a direction away from the center of the reinforcing bar binding robot 100 in the X direction, the interval between the first reinforcing bars R10 (the interval between the first reinforcing bar R13 and the first reinforcing bar R14) may be calculated to be 120 and the lateral movement amount may be controlled to be 120. For example, if the fourth sensor 130d is attached at a position 20 cm away in the X direction from the center of the X direction of the reinforcing bar binding robot 100 (e.g., the position of the first reinforcing bar R13), and the first reinforcing bar R14 is located 4 cm away from the fourth sensor 130d in a direction away from the center of the X direction of the reinforcing bar binding robot 100, the spacing of the first reinforcing bar R10 (the spacing between the first reinforcing bar R13 and the first reinforcing bar R14) may be calculated to be 24 cm, and control may be performed to set the lateral movement amount to 24 cm. If the fourth sensor 130d is mounted at a position 20 cm away in the X direction from the center of the reinforcing bar binding robot 100 in the X direction (for example, the position of the first reinforcing bar R13) and the first reinforcing bar R14 is at a position 4 cm closer to the center of the reinforcing bar binding robot 100 in the X direction from the fourth sensor 130d, the interval between the first reinforcing bars R10 (the interval between the first reinforcing bar R13 and the first reinforcing bar R14) may be calculated to be 16 cm, and the lateral movement amount may be controlled to be 16 cm.

For example, as described above, regarding the lateral movement amount of the reinforcing bar binding robot 100, when the reinforcing bar binding robot 100 performs the lateral movement to bind the next intersecting section on the first reinforcing bar R14, the lateral movement amount may be calculated so that the reinforcing bar binding robot 100 performs the lateral movement corresponding to the interval between two adjacent first reinforcing bars R10 as a whole. In the example described above, the first traveling unit 120a and the third traveling unit 120c move from the first reinforcing bar R12 to the first reinforcing bar R13, and the second traveling unit 120b and the fourth traveling unit 120d move from the first reinforcing bar R14 to the first reinforcing bar R15. In the embodiment of the present disclosure, the first reinforcing bars R10 are arranged at approximately equal intervals and approximately parallel to each other, so that the movement amounts of the first traveling unit 120a to the fourth traveling unit 120d are the same in the X direction. Therefore, the lateral movement amount may be, for example, the interval in the X direction between the first reinforcing bar R14 and the first reinforcing bar R15 detected by the fourth sensor 130d. Alternatively, since the intervals between the first reinforcing bars R10 are substantially equal, the lateral movement amount may be calculated based on the interval between the adjacent first reinforcing bars R10 calculated based on the detection results of other sensors. The distances in the X direction between the plurality of (for example, three or more) first reinforcing bars R10 are calculated, and an average value is obtained, so that the lateral movement amount may be calculated from the average value of the intervals between the first reinforcing bars R10. By calculating the average value, for example, even when there is an error in the intervals between the first reinforcing bars R10, an influence of the error on the calculated lateral movement amount can be reduced.

Next, the lateral movement of the reinforcing bar binding robot 100 is executed based on the calculated lateral movement amount (S1918).

The reinforcing bar binding robot 100 that has completed the lateral movement travels, for example, along the first reinforcing bar R13 and the first reinforcing bar R15 after the movement (S1920) and may start the binding work on the intersecting section c12 on the first reinforcing bar R14.

For example, the end R10e of the first reinforcing bar R10 described above may be detected by preparing a template corresponding to the image of the end R10e and determining based on a matching degree with the template of the end R10e. For example, when the template image extending in one direction as shown in FIG. 16 is prepared for a portion other than the end R10e, a template image in which a length in the Y direction of a portion corresponding to the reinforcing bar is shorter than that of the portion other than the end R10e may be prepared for the end R10e.

Alternatively, when the matching degree is within a certain value range, it may be determined that the end R10e is being reached. For example, in the portion other than the end R10e of the first reinforcing bar R10, the presence of the portion other than the end R10e of the first reinforcing bar R10 may be determined if the matching degree is close to 100%, that is, equal to or greater than 75%, and the robot is determined traveling on a portion close to the end R10e of the first reinforcing bar R10 if the matching degree is relatively low, for example, 50% or more and 75% or less. For the portion other than the end R10e and the vicinity of the end R10e, the matching degree here is an example and may be set to other values, or the matching degree may be changed according to an arrangement state of the reinforcing bars, other environments, and the like.

Accordingly, when the reinforcing bar binding robot 100 performs the lateral movement, the detection result of the first reinforcing bar R10 by the third sensor 130c and/or the fourth sensor 130d is used in particular. Regarding the third sensor 130c and the fourth sensor 130d, as described above, for example, the detection results of the position of the second reinforcing bar R20 by the third sensor 130c and the fourth sensor 130d may be used to calculate the position of the intersecting section c12 of the first reinforcing bar R10 and the second reinforcing bar R20, and the detection results of the position of the first reinforcing bar R10 by the third sensor 130c and the fourth sensor 130d may not be used to calculate the position of the intersecting section c12 of the first reinforcing bar R10 and the second reinforcing bar R20, and thus in this case, the first reinforcing bar R10 may not be detected by the third sensor 130c and the fourth sensor 130d. When the reinforcing bar binding robot 100 progresses with the reinforcing bar binding work and reaches the end R10e of the first reinforcing bar R10, for example, the reinforcing bar binding robot 100 performs the lateral movement, and thus, in order to be able to calculate the movement amount and be able to detect the first reinforcing bar R10 by the third sensor 130c and/or the fourth sensor 130d, the imaging ranges of the third sensor 130c and/or the fourth sensor 130d may be changed by, for example, a method of changing orientations of the third sensor 130c and/or the fourth sensor 130d.

Although the case where the detection results of the first sensor 130a and the fourth sensor 130d are used has been described above as an example with reference to FIG. 19, the sensors whose detection results are referred to are not limited thereto, and for example, it is also possible to change the sensors to be used according to the direction along which the reinforcing bar binding robot 100 is traveling. As described above, when the end R10e of the first reinforcing bar R10 is detected by the first sensor 130a, the reinforcing bar binding robot 100 is not limited to performing the lateral movement toward the direction of the fourth sensor 130c, and for example, when the end R10e of the first reinforcing bar R10 is detected by the first sensor 130a, the reinforcing bar binding robot 100 may perform the lateral movement toward the direction of the third sensor 130c. For example, when the end R10e of the first reinforcing bar R10 is detected by the second sensor 130b, the reinforcing bar binding robot 100 may perform the lateral movement toward the direction of the third sensor 130c, or when the end R10e of the first reinforcing bar R10 is detected by the second sensor 130b, the reinforcing bar binding robot 100 may perform the lateral movement toward the direction of the fourth sensor 130d.

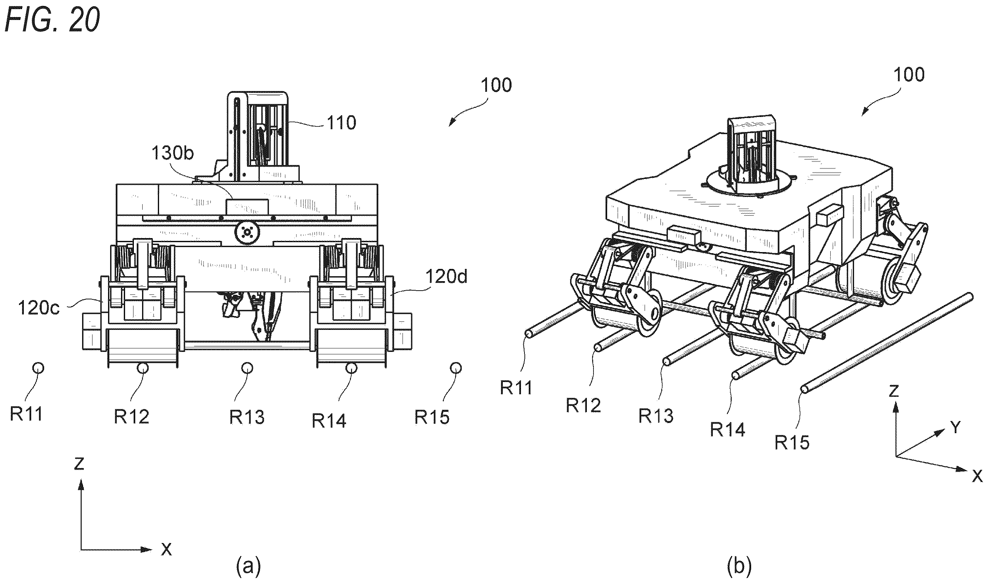

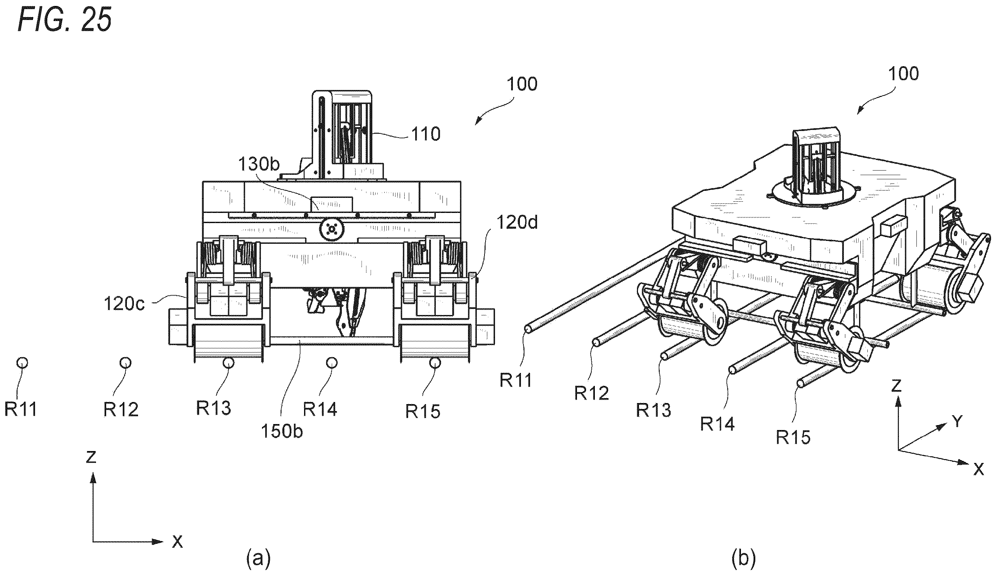

Hereinafter, an example of the lateral movement of the reinforcing bar binding robot 100 will be described with reference to FIGS. 20 to 25. FIGS. 20 to 25 include diagrams of the reinforcing bar binding robot 100 during the lateral movement as viewed from a back side (rear side in the Y direction) of the reinforcing bar binding robot 100 and as viewed obliquely from the upper side, (a) of FIG. 20 to (a) of FIG. 25 are diagrams of the reinforcing bar binding robot 100 as viewed from the back side, and (b) of FIG. 20 to (b) of FIG. 25 are diagrams of the reinforcing bar binding robot 100 as viewed obliquely from the upper direction.

(a) and (b) of FIG. 20 show the reinforcing bar binding robot 100 before starting the lateral movement. As shown in (a) and (b) of FIG. 20, the reinforcing bar binding robot 100 travels on the first reinforcing bars R12 and R14.

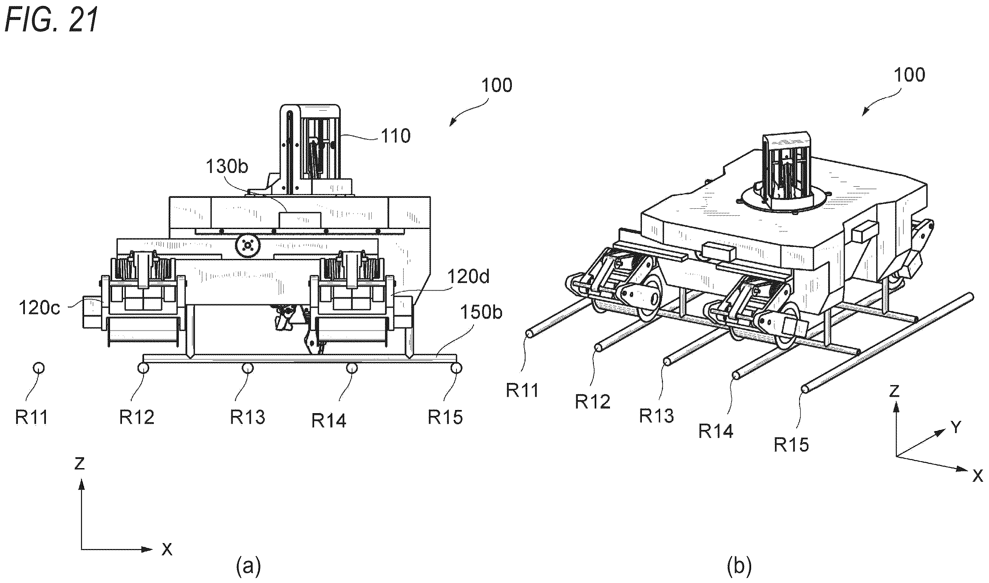

Next, the reinforcing bar binding robot 100 starts the lateral movement. In the embodiment of the present disclosure, as described above, for example, if it is determined based on the detection result of the first sensor 130a that the robot has reached or is reaching the vicinity of the end R10e of the first reinforcing bar R10, it is determined that the robot starts the lateral movement. (a) and (b) of FIG. 21 show a state when the reinforcing bar binding robot 100 starts the lateral movement. As shown in (a) and (b) of FIG. 21, the reinforcing bar binding robot 100 moves in a direction (X direction) in which the body unit 140 is moved without moving the traveling unit 120. As shown in (a) and (b) of FIG. 21, in this case, the first traveling unit 120a and the second traveling unit 120b are present on the first reinforcing bar R12 and the first reinforcing bar R14, respectively, without moving. In this case, the support bars 150a and 150b are not in contact with any reinforcing bar. The lateral movement (here, for example, movement in the horizontal direction (movement in the X direction)) of the body unit 140 may be executed by, for example, the first movement motor 182 and the second movement motor 184 of the movement unit 180 (not shown in (a) and (b) of FIG. 21).

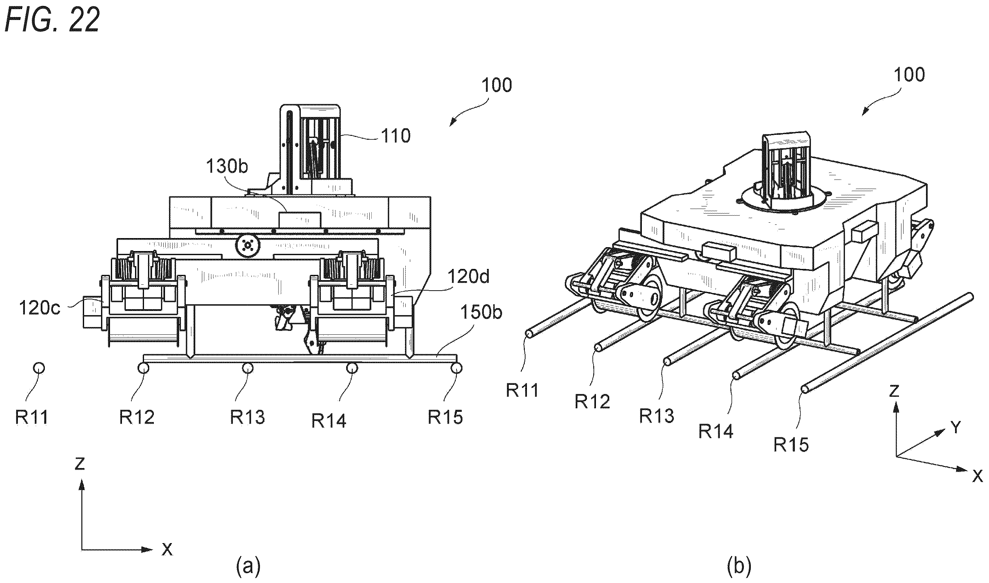

Next, the reinforcing bar binding robot 100 moves the traveling unit 120 in the upper direction. As shown in (a) of FIG. 22 and (b) of FIG. 22, the traveling unit 120 is raised to the upper side in the Z direction in (a) of FIG. 22 and (b) of FIG. 22. When the traveling unit 120 is raised, the support bars 150a and 150b are relatively lowered. When the traveling unit 120 moves away from the first reinforcing bars R10, the support bars 150a and 150b are in contact with the first reinforcing bars R10. For example, the traveling unit 120 may be configured such that a length in the Z direction can be changed by bending arms supporting the rollers (the first roller 122a, the second roller 122b, the third roller 122c, and the fourth roller 122d) by the motors and the like (for example, the first wheel height changing motor 126a, the second wheel height changing motor 126b, the third wheel height changing motor 126c, and the fourth wheel height changing motor 126d shown in FIG. 7), or may be configured such that the rollers 122 are raised by bending the arms and the rollers 122 are moved away from the first reinforcing bars R10.

As shown in (a) of FIG. 22 and (b) of FIG. 22, for example, the support bars 150a and 150b are in contact with the first reinforcing bars R11 to R14. In this way, the entire reinforcing bar binding robot 100 is supported by the support bars 150a and 150b.

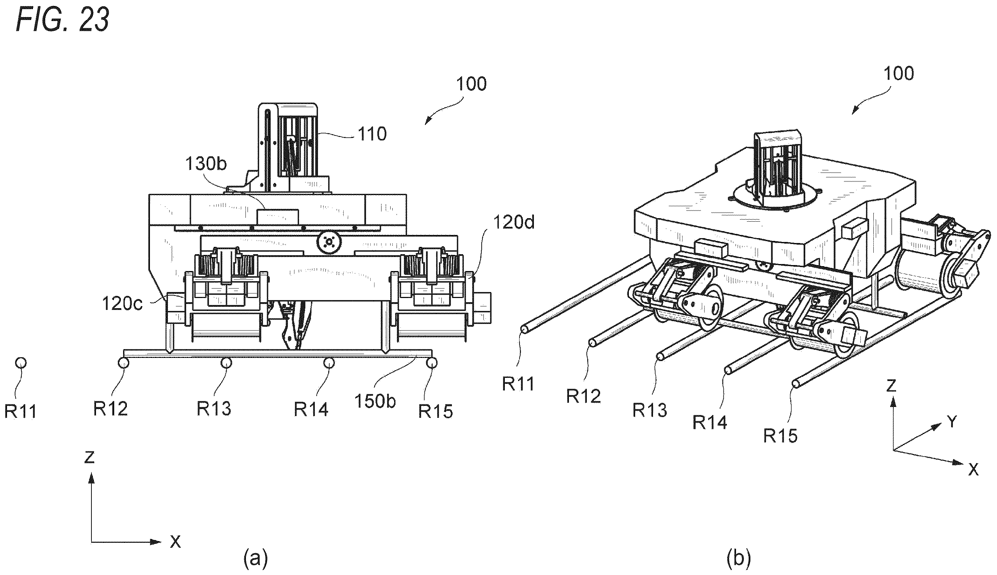

Next, the traveling unit 120 of the reinforcing bar binding robot 100 moves in the X direction. As shown in (a) of FIG. 23 and (b) of FIG. 23, the first traveling unit 120a and the third traveling unit 120c, and the second traveling unit 120b and the fourth traveling unit 120d, which are in contact with the first reinforcing bar R12 and the first reinforcing bar R14, respectively, are moved above the first reinforcing bar R13 and the first reinforcing bar R15. In this case, none of the first traveling unit 120a to the fourth traveling unit 120d is in contact with the first reinforcing bars R10, and the support bars 150a and 150b are in contact with the first reinforcing bars R10 to support the reinforcing bar binding robot 100.

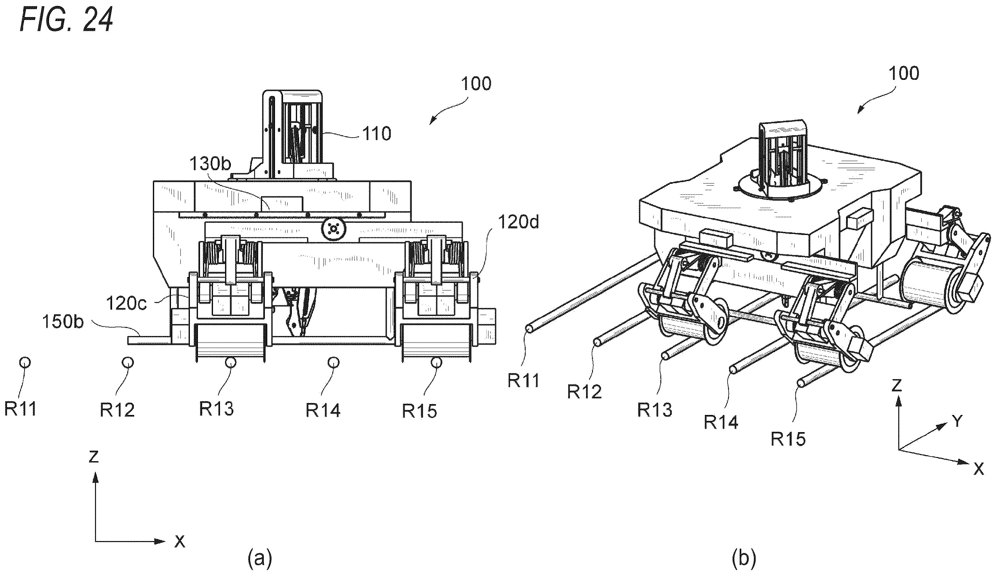

Subsequently, the traveling unit 120 is lowered. As shown in (a) of FIG. 24 and (b) of FIG. 24, the traveling unit 120 is lowered to the lower side in the Z direction in (a) of FIG. 24 and (b) of FIG. 24. As shown in (a) of FIG. 24 and (b) of FIG. 24, the first traveling unit 120a and the third traveling unit 120c are in contact with the first reinforcing bar R13, and the second traveling unit 120b and the fourth traveling unit 120d are in contact with the first reinforcing bar R15. Therefore, the support bars 150a and 150b are raised relatively. Therefore, the reinforcing bar binding robot 100 is supported by the traveling unit 120 in this state.

Next, as shown in (a) of FIG. 25 and (b) of FIG. 25, the body unit 140 is moved in the X direction. Similar to the above description with reference to (a) of FIG. 21 and (b) of FIG. 21, the lateral movement (here, for example, movement in the horizontal direction (movement in the X direction)) of the body unit 140 shown in (a) of FIG. 25 and (b) of FIG. 25 may be executed by, for example, the first movement motor 182 and the second movement motor 184 of the movement unit 180 (not shown in (a) and (b) of FIG. 25). In this way, the lateral movement of the reinforcing bar binding robot 100 is completed. For example, the reinforcing bar binding robot 100 starts traveling on the first reinforcing bar R13 and the first reinforcing bar R15, and performs the binding work on the intersecting sections c12 of the first reinforcing bar R10 and the second reinforcing bar R20 on the first reinforcing bar R14.

Although the case where the reinforcing bar binding robot 100 moves from the first reinforcing bars R12 and R14 to the first reinforcing bars R13 and R15 has been described above as an example, for example, the reinforcing bar binding robot 100 can also move to a destination separated by the plurality of first reinforcing bars R10. Also in this case, it is possible to move by the same method as described above, or it is possible to move by a longer distance by repeating the above-described moving method. In the case of moving to a destination separated by the plurality of first reinforcing bars R10, the movement amount may also be calculated based on the detection result of the sensor unit 130 by the same method described above.

The reinforcing bar binding robot 100 may perform the lateral movement by other methods, not limited to the method described above, and in that case, the movement amount of the reinforcing bar binding robot 100 can be calculated based on the detection result of the sensor unit 130 according to the method for calculating the movement amount in the embodiment of the present disclosure, and the movement of the reinforcing bar binding robot 100 can be smoothly performed by using the method for calculating the movement amount in the embodiment of the present disclosure.

As described above, the reinforcing bar binding robot 100 according to the embodiment of the present disclosure includes: the traveling unit 120 configured to travel on the reinforcing bar group R including the plurality of first reinforcing bars R1 whose extending direction is the first direction (Y direction ) and the plurality of second reinforcing bars R2 whose extending direction is the second direction (X direction) intersecting with the first direction (Y direction) and arranged to intersect with the first reinforcing bars R1; the sensor unit 130 configured to detect at least one first reinforcing bar R1 and/or at least one second reinforcing bar R2; and the first reinforcing bar determination unit 164a1 and/or a second reinforcing bar determination unit 164a2 (also referred to as "reinforcing bar position calculation unit" in the present embodiment) configured to calculate the position of the at least one first reinforcing bar R1 and/or the at least one second reinforcing bar R2 detected by the sensor unit 130 based on pixel values of a plurality of pixels constituting a two-dimensional image generated by the detection results of the sensor unit 130. The reinforcing bar binding robot 100 according to the embodiment of the present disclosure can improve efficiency of a calculation process of the positions of the first reinforcing bar R10 and/or the second reinforcing bar R20 by calculating the positions of the first reinforcing bar R10 and/or the second reinforcing bar R20 based on the two-dimensional image generated based on the detection results of the sensor unit 130. Therefore, a reinforcing bar detection process in the reinforcing bar phase work of the reinforcing bar binding robot 100 can be made efficient. For example, as compared with a case where a position of a reinforcing bar is calculated using three-dimensional data as a detection result of a sensor unit, a calculation load can be reduced by performing the calculation based on a two-dimensional image.

Improvement in a technical level of various units constituting the reinforcing bar binding robot 100 makes it possible to increase a speed and efficiency of the reinforcing bar binding work. In order to achieve an increase in the speed of the reinforcing bar binding work, it is considered that an increase in the speed of the reinforcing bar detection and the reinforcing bar binding position detection process is desired. The reinforcing bar binding robot 100 according to the embodiment of the present disclosure can improve the efficiency of the reinforcing bar detection process, thereby contributing to an increase in the speed of the reinforcing bar binding work.

The reinforcing bar binding robot 100 according to the embodiment of the present disclosure includes: the reinforcing bar binding unit 110 configured to bind the intersecting section c12 of the first reinforcing bar R10 and the second reinforcing bar R20 included in the reinforcing bar group, the reinforcing bar group including the plurality of first reinforcing bars R10 whose extending direction is the first direction (Y direction), and the plurality of second reinforcing bars R20 whose extending direction is the second direction (X direction) intersecting with the first direction (Y direction) and arranged to intersect with the first reinforcing bars R10; the traveling unit 120 configured to travel on the first reinforcing bars R10 and/or the second reinforcing bars R20; the first sensor 130a and the second sensor 130b configured to detect at least one first reinforcing bar R10 and/or at least one second reinforcing bar R20, and disposed away from each other along the third direction (Y direction); and the third sensor 130c and the fourth sensor 130d configured to detect at least one first reinforcing bar R10 and/or at least one second reinforcing bar R20, and disposed away from each other along the fourth direction (X direction) intersecting with the third direction (Y direction). As described above, since the reinforcing bar binding robot 100 includes the four sensors 130 (the first sensor 130a, the second sensor 130b, the third sensor 130c, and the fourth sensor 130d), for example, as described above, the intersecting section c12 of the first reinforcing bar R10 and the second reinforcing bar R20 can be efficiently detected. The position of the intersecting section c12 can be confirmed, for example, by providing a sensor in the vicinity of the reinforcing bar binding unit 110, but since the reinforcing bar binding unit 110 is configured to move in the upper-lower direction, it may be difficult to provide the sensor in the vicinity thereof. In the embodiment of the present disclosure, the position of the intersecting section c12 can be estimated based on the detection results of the four sensors 130 without providing a sensor in the vicinity of the reinforcing bar binding unit 110.

For example, the reinforcing bar binding robot 100 according to the embodiment of the present disclosure includes: the reinforcing bar binding unit 110 configured to bind the intersecting section c12 of the first reinforcing bar R10 and the second reinforcing bar R20 included in the reinforcing bar group, the reinforcing bar group including the plurality of first reinforcing bars R10 whose extending direction is the first direction (Y direction), and the plurality of second reinforcing bars R20 whose extending direction is the second direction (X direction) intersecting with the first direction (Y direction); the traveling unit 120 configured to travel on the first reinforcing bars R10 and/or the second reinforcing bars R20; the sensor unit 130 configured to detect the first reinforcing bars R10 and/or the second reinforcing bars R20; and the movement amount calculation unit 174 configured to calculate the movement amount of the traveling unit 120 based on the position information on the first reinforcing bars R10 or the second reinforcing bars R20 detected by the sensor unit 130 when the traveling unit 120 moves from the first reinforcing bar R10 or the second reinforcing bar R20 on which the traveling unit 120 is traveling to another first reinforcing bar R10 or another second reinforcing bar R20. As described above, for example, the reinforcing bar binding robot 100 according to the embodiment of the present disclosure can determine, based on the detection result of the sensor unit 130, the position of the reinforcing bar as a movement destination of the reinforcing bar binding robot 100, and calculate the movement amount of the reinforcing bar binding robot 100 based on the position of the reinforcing bar on which the traveling unit 120 of the reinforcing bar binding robot 100 is traveling and the position of the reinforcing bar as the movement destination. For example, when the reinforcing bar binding robot 100 reaches the end of the reinforcing bar on which the reinforcing bar binding work has been performed and moves to the reinforcing bar to be subjected to the reinforcing bar binding work, the movement amount can be calculated based on the detection result of the sensor unit 130.

In the embodiment of the present disclosure described above, the case where the reinforcing bar binding robot 100 performs the reinforcing bar binding work on the intersecting section c12 of the first reinforcing bar R10 and the second reinforcing bar R20 in the reinforcing bar group in which the first reinforcing bars R10 and the second reinforcing bars R20 are arranged orthogonal to each other has been described as an example, but the reinforcing bar binding robot 100 according to the embodiment of the present disclosure may also be used when the first reinforcing bars R10 and the second reinforcing bars R20 are in a non-orthogonal relation.

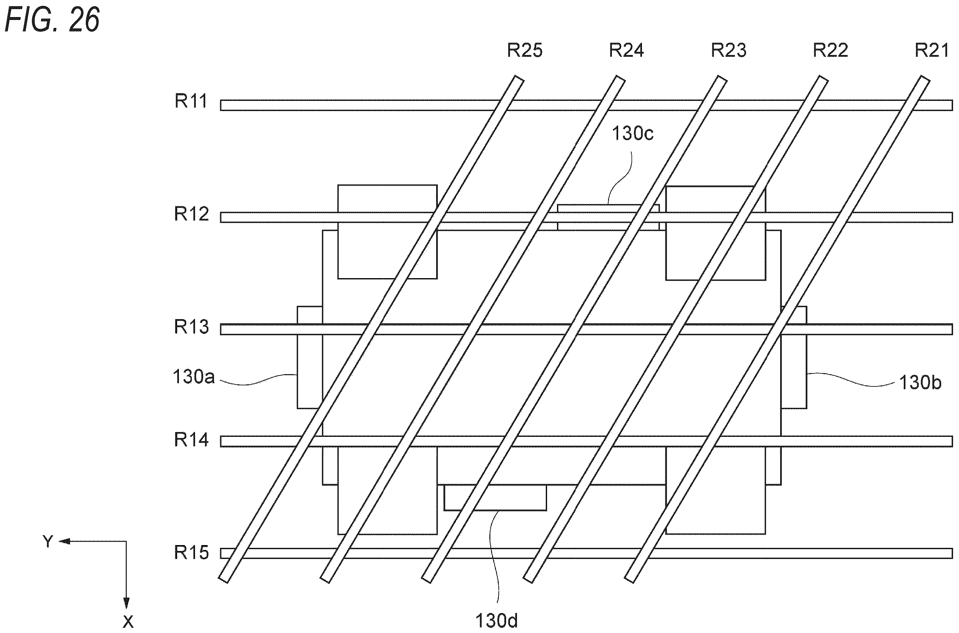

FIG. 26 is a schematic diagram of a reinforcing bar binding robot 200 according to another embodiment of the present disclosure as viewed from the lower side in the Z direction. As shown in FIG. 26, in the present embodiment, the second reinforcing bars R20 are arranged at an angle of about 30° with respect to the first reinforcing bars R10. The reinforcing bar binding robot 200 according to the present embodiment differs from the reinforcing bar binding robot 100 in the positions of the third sensor 130c and the fourth sensor 130d. The third sensor 130c and the fourth sensor 130d of the reinforcing bar binding robot 200 are arranged to be present on a straight line inclined by 30° with respect to the X direction. In the reinforcing bar binding robot 200, by aligning the third sensor 130c and the fourth sensor 130d with the second reinforcing bars R20 and arranging the third sensor 130c and the fourth sensor 130d in a direction inclined from the X direction, the second reinforcing bars R20 can be detected by the same method as that in the reinforcing bar binding robot 100.

Accordingly, the arrangement of the first sensor 130a to the fourth sensor 130d may be changed according to the arrangement configuration of the first reinforcing bars R10 and the second reinforcing bars R20. For example, the arrangement of the first sensor 130a, the second sensor 130b, the third sensor 130c, and/or the fourth sensor 130d may be manually or automatically adjusted before the reinforcing bar binding work is started according to a construction site where the reinforcing bar group R subjected to the binding work is disposed. Alternatively, even after the reinforcing bar binding robot 100 starts traveling, a relation between the first reinforcing bar R10 and the second reinforcing bar R20 may be determined based on the detection result of the sensor unit 130, and the arrangement of the first sensor 130a, the second sensor 130b, the third sensor 130c, and/or the fourth sensor 130d may be dynamically changed based on the determination result. In this case, for example, motors or the like capable of driving the first sensor 130a to the fourth sensor 130d may be provided, and the positions of the first sensor 130a to the fourth sensor 130d may be changed by driving by the motors.

The present embodiment is described above with reference to specific examples. However, the present disclosure is not limited to these specific examples. Design changes made by those skilled in the art as appropriate to these specific examples are also included within the scope of the present disclosure as long as the changes have characteristics of the present disclosure. Elements, arrangements, conditions, shapes, and the like included in the specific examples described above are not limited to those illustrated, and can be appropriately changed. The elements included in each of the specific examples described above can be appropriately combined as long as no technical contradiction occurs.

### (Appendix 1)

A reinforcing bar binding robot includes:
a traveling unit configured to travel on a reinforcing bar group including a plurality of first reinforcing bars whose extending direction is a first direction and a plurality of second reinforcing bars whose extending direction is a second direction intersecting with the first direction and which are arranged to intersect with the first reinforcing bars;
a sensor unit configured to detect at least one first reinforcing bar of the first reinforcing bars and/or at least one second reinforcing bar of the second reinforcing bars; and
a reinforcing bar position calculation unit configured to calculate a position of the at least one first reinforcing bar and/or the at least one second reinforcing bar detected by the sensor unit based on pixel values of a plurality of pixels that constitute a two-dimensional image generated by a detection result of the sensor unit.

### (Appendix 2)

The reinforcing bar binding robot according to Appendix 1, further includes:
a storage device for storing information on at least one template image including a partial image of the first reinforcing bars and/or the second reinforcing bars, in which
the two-dimensional image includes a grayscale image, and the reinforcing bar position calculation unit calculates the position of the at least one first reinforcing bar and/or the at least one second reinforcing bar by comparing the grayscale image with the template image.

### (Appendix 3)

According to the reinforcing bar binding robot of Appendix 2,
the reinforcing bar position calculation unit determines that, when a grayscale value of a pixel forming the grayscale image is equal to or greater than a first threshold, at least a part of the first reinforcing bar and/or at least a part of the second reinforcing bar is present at a position corresponding to the pixel having the grayscale value equal to or greater than the first threshold.

### (Appendix 4)

According to the reinforcing bar binding robot of Appendix 2,
the sensor unit includes a three-dimensional sensor capable of detecting x-coordinates, y-coordinates, and z-coordinates of a plurality of points on a surface of an object to be detected,
a value of the z-coordinate detected by the three-dimensional sensor is converted into an image grayscale that differs depending on a size of the value of the z-coordinate, and
the grayscale image is generated by forming a two-dimensional image based on the x-coordinates, the y-coordinates, and the image grayscales.

### (Appendix 5)

According to the reinforcing bar binding robot of Appendix 2,
the sensor unit includes an imaging device, and
the grayscale image is generated based on an image captured by the imaging device.

### (Appendix 6)

According to the reinforcing bar binding robot of any one of Appendix 2 to Appendix 5,
the reinforcing bar position calculation unit calculates the position of the at least one first reinforcing bar and/or the at least one second reinforcing bar based on a matching degree between the grayscale image and the template image.

### (Appendix 7)

According to the reinforcing bar binding robot of Appendix 6,
the reinforcing bar position calculation unit determines whether the matching degree is equal to or greater than a predetermined reference value, and
if the matching degree is equal to or greater than the predetermined reference value, the reinforcing bar position calculation unit determines that the first reinforcing bar and/or the second reinforcing bar are present within a detection range by the sensor unit.

### (Appendix 8)

The reinforcing bar binding robot of Appendix 7, further includes:
a robot height calculation unit for calculating a height of the reinforcing bar binding robot from the reinforcing bar group, in which
the predetermined reference value includes a plurality of reference values corresponding to different heights of the reinforcing bar binding robot,
the reinforcing bar position calculation unit determines whether a reference value corresponding to the height of the reinforcing bar binding robot from the reinforcing bar group calculated by the robot height calculation unit is present in the plurality of reference values,
if determined that the reference value corresponding to the height is present in the plurality of reference values, the reinforcing bar position calculation unit calculates the position of the first reinforcing bar and/or the second reinforcing bar based on the reference value, and
if determined that the reference value corresponding to the height is not present in the plurality of reference values, the reinforcing bar position calculation unit calculates a new reference value corresponding to the height based on at least two of the plurality of reference values.

### (Appendix 9)

The reinforcing bar binding robot of any one of Appendix 6 to Appendix 8, further includes:
a reinforcing bar binding unit configured to bind the first reinforcing bar and the second reinforcing bar of the reinforcing bar group at an intersecting section, in which
the sensor unit includes a first sensor and a second sensor arranged away from each other along a third direction and configured to detect at least the first reinforcing bar,
the at least one template image includes a first template image including a partial image of the first reinforcing bar,
the reinforcing bar binding robot is disposed such that the traveling unit advances in the first direction and the third direction is parallel to the first direction,
the reinforcing bar position calculation unit calculates the position of the first reinforcing bar by comparing a detection result of the first sensor and/or the second sensor with the first template image, and
the reinforcing bar binding unit binds at the intersecting section on the first reinforcing bar whose position is calculated.

### (Appendix 10)

The reinforcing bar binding robot of Appendix 9, further includes:
an intersecting section estimation unit for estimating the intersecting section, in which
the sensor unit includes a third sensor and a fourth sensor that are arranged away from each other along a fourth direction intersecting with the third direction and are configured to detect at least the second reinforcing bar,
the at least one template image includes a second template image that includes a partial image of the second reinforcing bar,
the reinforcing bar binding robot is disposed such that the fourth direction is parallel to the second direction,
the reinforcing bar position calculation unit calculates the position of the second reinforcing bar by comparing a detection result of the third sensor and/or the fourth sensor with the second template image,
the intersecting section estimation unit estimates the intersecting section as an intersection point between the calculated first reinforcing bar and the calculated second reinforcing bar, and
the reinforcing bar binding unit binds at the estimated intersecting section.

### (Appendix 11)

The reinforcing bar binding robot of Appendix 10, further includes:
a movement amount calculation unit for calculating a movement amount of the traveling unit based on position information of the first reinforcing bar calculated by the reinforcing bar position calculation unit when the traveling unit moves from the first reinforcing bar on which the traveling unit is advancing to another first reinforcing bar, in which
the movement amount calculation unit calculates a movement amount in the second direction based on a detection result of the another first reinforcing bar detected by the third sensor and/or the fourth sensor, and
the traveling unit moves in the second direction based on the calculated movement amount in the second direction.

### (Appendix 12)

The reinforcing bar binding robot of Appendix 10, further includes:
a movement amount calculation unit for calculating a movement amount of the traveling unit based on position information of the first reinforcing bar calculated by the reinforcing bar position calculation unit when the traveling unit moves from the first reinforcing bar on which the traveling unit is advancing to another first reinforcing bar, in which
the reinforcing bar position calculation unit:
   calculates the position of the first reinforcing bar on which the traveling unit is advancing based on the detection result of the first sensor and/or the second sensor; and
   when the matching degree of the detection result of the first sensor is less than the predetermined reference value, determines whether the matching degree is equal to or greater than a predetermined end reference value, and when it is determined that the matching degree is equal to or greater than the predetermined end reference value, determines that an end of the first reinforcing bar is present within the detection range of the first sensor, and
when determined that the end of the first reinforcing bar is present within the detection range of the first sensor, the reinforcing bar position calculation unit calculates the position of the another first reinforcing bar that is away from the first reinforcing bar on which the traveling unit is advancing in the second direction based on the detection result of the another first reinforcing bar detected by the third sensor and/or the fourth sensor,
the movement amount calculation unit calculates a movement amount of the traveling unit in the second direction based on the position of the another first reinforcing bar calculated by the reinforcing bar position calculation unit and the position of the first reinforcing bar on which the traveling unit is advancing, and
the traveling unit moves in the second direction based on the calculated movement amount in the second direction.

The present application is based on Japanese Patent Application No. 2023-007174 filed on January 20, 2023, the contents of which are incorporated herein by reference.

The reinforcing bar binding machine according to the present application can improve the efficiency of the reinforcing bar detection process.

### REFERENCE SIGNS LIST

- 100, 200: reinforcing bar binding robot
- 110: reinforcing bar binding unit
- 120: traveling unit
- 130: sensor unit
- 130a: first sensor
- 130b: second sensor
- 130c: third sensor
- 130d: fourth sensor
- 140: body unit
- 150: support bar
- 160: control device
- 164al: first reinforcing bar determination unit (reinforcing bar position calculation unit)
- 164a2: second reinforcing bar determination unit (reinforcing bar position calculation unit)
- 164e: robot height calculation unit (robot height calculation unit)
- 166: intersecting section calculation unit (intersecting section estimation unit)
- 174: movement amount calculation unit (movement amount calculation unit)
- 190: storage device
- c12: intersecting section
- cp12: intersecting portion
- R10: first reinforcing bar
- R20: second reinforcing bar

## Claims

1. A reinforcing bar binding robot, comprising:
a traveling unit configured to travel on a reinforcing bar group including a plurality of first reinforcing bars whose extending direction is a first direction and a plurality of second reinforcing bars whose extending direction is a second direction intersecting with the first direction and which are arranged to intersect with the first reinforcing bars;
a sensor unit configured to detect at least one first reinforcing bar of the first reinforcing bars and/or at least one second reinforcing bar of the second reinforcing bars; and
a reinforcing bar position calculation unit configured to calculate a position of the at least one first reinforcing bar and/or the at least one second reinforcing bar detected by the sensor unit based on pixel values of a plurality of pixels that form a two-dimensional image generated by a detection result of the sensor unit.

2. The reinforcing bar binding robot according to claim 1, further comprising:
a storage device for storing information on at least one template image including a partial image of the first reinforcing bars and/or the second reinforcing bars, wherein
the two-dimensional image includes a grayscale image, and the reinforcing bar position calculation unit calculates the position of the at least one first reinforcing bar and/or the at least one second reinforcing bar by comparing the grayscale image with the template image.

3. The reinforcing bar binding robot according to claim 2, wherein
the reinforcing bar position calculation unit determines that, when a grayscale value of a pixel forming the grayscale image is equal to or greater than a first threshold, at least a part of the first reinforcing bar and/or at least a part of the second reinforcing bar is present at a position corresponding to the pixel having the grayscale value equal to or greater than the first threshold.

4. The reinforcing bar binding robot according to claim 2, wherein
the sensor unit includes a three-dimensional sensor capable of detecting x-coordinates, y-coordinates, and z-coordinates of a plurality of points on a surface of an object to be detected,
a value of the z-coordinate detected by the three-dimensional sensor is converted into an image grayscale that differs depending on a size of the value of the z-coordinate, and
the grayscale image is generated by forming a two-dimensional image based on the x-coordinates, the y-coordinates, and the image grayscales.

5. The reinforcing bar binding robot according to claim 2, wherein
the sensor unit includes an imaging device, and
the grayscale image is generated based on an image captured by the imaging device.

6. The reinforcing bar binding robot according to claim 2, wherein
the reinforcing bar position calculation unit calculates the position of the at least one first reinforcing bar and/or the at least one second reinforcing bar based on a matching degree between the grayscale image and the template image.

7. The reinforcing bar binding robot according to claim 6, wherein
the reinforcing bar position calculation unit determines whether the matching degree is equal to or greater than a predetermined reference value, and
if the matching degree is equal to or greater than the predetermined reference value, the reinforcing bar position calculation unit determines that the first reinforcing bar and/or the second reinforcing bar are present within a detection range by the sensor unit.

8. The reinforcing bar binding robot according to claim 7, further comprising:
a robot height calculation unit for calculating a height of the reinforcing bar binding robot from the reinforcing bar group, wherein
the predetermined reference value includes a plurality of reference values corresponding to different heights of the reinforcing bar binding robot,
the reinforcing bar position calculation unit determines whether a reference value corresponding to the height of the reinforcing bar binding robot from the reinforcing bar group calculated by the robot height calculation unit is present in the plurality of reference values,
if determined that the reference value corresponding to the height is present in the plurality of reference values, the reinforcing bar position calculation unit calculates the position of the first reinforcing bar and/or the second reinforcing bar based on the reference value, and
if determined that the reference value corresponding to the height is not present in the plurality of reference values, the reinforcing bar position calculation unit calculates a new reference value corresponding to the height based on at least two of the plurality of reference values.

9. The reinforcing bar binding robot according to claim 6, further comprising:
a reinforcing bar binding unit configured to bind the first reinforcing bar and the second reinforcing bar of the reinforcing bar group at an intersecting section, wherein
the sensor unit includes a first sensor and a second sensor arranged away from each other along a third direction and configured to detect at least the first reinforcing bar,
the at least one template image includes a first template image including a partial image of the first reinforcing bar,
the reinforcing bar binding robot is disposed such that the traveling unit advances in the first direction and the third direction is parallel to the first direction,
the reinforcing bar position calculation unit calculates the position of the first reinforcing bar by comparing a detection result of the first sensor and/or the second sensor with the first template image, and
the reinforcing bar binding unit binds at the intersecting section on the first reinforcing bar whose position is calculated.

10. The reinforcing bar binding robot according to claim 9, further comprising:
an intersecting section estimation unit for estimating the intersecting section, wherein
the sensor unit includes a third sensor and a fourth sensor that are arranged away from each other along a fourth direction intersecting with the third direction and are configured to detect at least the second reinforcing bar,
the at least one template image includes a second template image that includes a partial image of the second reinforcing bar,
the reinforcing bar binding robot is disposed such that the fourth direction is parallel to the second direction,
the reinforcing bar position calculation unit calculates the position of the second reinforcing bar by comparing a detection result of the third sensor and/or the fourth sensor with the second template image,
the intersecting section estimation unit estimates the intersecting section as an intersection point between the calculated first reinforcing bar and the calculated second reinforcing bar, and
the reinforcing bar binding unit binds at the estimated intersecting section.

11. The reinforcing bar binding robot according to claim 10, further comprising:
a movement amount calculation unit for calculating a movement amount of the traveling unit based on position information of the first reinforcing bar calculated by the reinforcing bar position calculation unit when the traveling unit moves from the first reinforcing bar on which the traveling unit is advancing to another first reinforcing bar, wherein
the movement amount calculation unit calculates a movement amount in the second direction based on a detection result of the another first reinforcing bar detected by the third sensor and/or the fourth sensor, and
the traveling unit moves in the second direction based on the calculated movement amount in the second direction.

12. The reinforcing bar binding robot according to claim 10, further comprising:
a movement amount calculation unit for calculating a movement amount of the traveling unit based on position information of the first reinforcing bar calculated by the reinforcing bar position calculation unit when the traveling unit moves from the first reinforcing bar on which the traveling unit is advancing to another first reinforcing bar, wherein
the reinforcing bar position calculation unit:
calculates the position of the first reinforcing bar on which the traveling unit is advancing based on the detection result of the first sensor and/or the second sensor; and
when the matching degree of the detection result of the first sensor is less than the predetermined reference value, determines whether the matching degree is equal to or greater than a predetermined end reference value, and when it is determined that the matching degree is equal to or greater than the predetermined end reference value, determines that an end of the first reinforcing bar is present within the detection range of the first sensor, and
when determined that the end of the first reinforcing bar is present within the detection range of the first sensor, the reinforcing bar position calculation unit calculates the position of the another first reinforcing bar that is away from the first reinforcing bar on which the traveling unit is advancing in the second direction based on the detection result of the another first reinforcing bar detected by the third sensor and/or the fourth sensor,
the movement amount calculation unit calculates a movement amount of the traveling unit in the second direction based on the position of the another first reinforcing bar calculated by the reinforcing bar position calculation unit and the position of the first reinforcing bar on which the traveling unit is advancing, and
the traveling unit moves in the second direction based on the calculated movement amount in the second direction.
